# FASCICULE DE BREVET EUROPEEN

(11) **EP 2 024 049 B1**
(45) Date de publication et mention de la délivrance du brevet: **23.01.2019**
(21) Numéro de dépôt: 07731104.1
(22) Date de dépôt: 07.03.2007
(51) Int. Cl.: B01D 15/18

(54) **PROCÉDÉ DE SÉPARATION DE FRACTIONS D'UN MÉLANGE**
VERFAHREN ZUM TRENNEN VON FRAKTIONEN EINES GEMISCHES
METHOD FOR SEPARATING FRACTIONS OF A MIXTURE

(30) Priorité: 08.03.2006 FR 0602076
(43) Date de publication de la demande: 18.02.2009
(73) Titulaire: Novasep Process, 54340 Pompey (FR)
(72) Inventeur: VALERY, Eric, F-54425 Pulnoy (FR); MOREY, Céline, F-54000 Nancy (FR)
(74) Mandataire: Hirsch & Associés
(86) Numéro de dépôt international: PCT/FR2007/000406
(87) Numéro de publication internationale: WO 2007/101944

(56) Documents cités:
- EP-B1- 0 878 222
- US-A- 3 268 605
- US-A- 4 182 633
- US-A- 5 457 260

## Description

La présente invention concerne un procédé de séparation de fractions d'un mélange, par chromatographie.

La chromatographie est une méthode de séparation basée sur la différence de distribution des produits d'un mélange entre une phase mobile (éluant ou solvant) et une phase stationnaire. Les produits sont séparés en percolant un fluide liquide, gazeux ou supercritique dans un dispositif (une colonne) rempli de phase stationnaire solide ou liquide.

Cette méthode est mise en oeuvre comme technique d'analyse afin d'identifier et de quantifier les produits d'un mélange. Elle peut également être mise en oeuvre comme technique de séparation ou de purification.

Selon les besoins, différents procédés chromatographiques sont employés pour réaliser la purification de molécules. Quelques-uns sont décrits dans la publication P.C. Wankat, Large scale Adsorption and Chromatography, CRC press, Boca-Raton, 1986, dans la publication M.D. Le Van, G. Carta, C. Yon, Perry's Handbook Eng., Ed. 7, Mac-Graw-Hill, N-1, 1997, ou dans la publication de R. M. Nicoud et M. Bailly, Choice and optimization of operating mode in industrial chromatography, Proceeding of the 9th International Symposium on preparative and industrial chromatography, PREP 92, April 1992, Nancy, p. 205-220.

Ces procédés peuvent être classés suivant plusieurs critères, notamment selon que le procédé est continu ou discontinu. Les procédés sont appliqués dans des dispositifs présentant une ou plusieurs colonnes, la composition de l'éluant peut être isocratique ou un gradient peut être effectué.

Les méthodes de réglage des paramètres des procédés chromatographiques sont au moins aussi nombreux que les procédés eux-mêmes. Plusieurs méthodes de régulation ou de suivi automatique des systèmes chromatographiques ont été publiées.

Le document FR 2 699 917 (US-A-5 569 808) de l'Institut Français du Pétrole décrit une méthode de régulation d'un procédé de séparation d'au moins un isomère d'hydrocarbure aromatique ayant de 8 à 10 atomes de carbone, contenu dans un mélange comprenant au moins deux des dits isomères, ledit procédé comportant une étape de séparation dans des conditions adéquates dans une zone de séparation. Ladite méthode comprend les étapes a) envoi simultané en au moins deux points appropriés de ladite zone, autres que des points de prélèvement d'effluents, d'un signal lumineux monochromatique de longueur d'onde comprise entre 400 et 1300 nanomètres, et de préférence entre 420 et 650 nanomètres ; b) récupération d'un signal diffusé polychromatique correspondant à l'effet Raman entre 400 et 3500 cm⁻¹, et de préférence entre 600 et 1200 cm⁻¹ sensiblement au niveau des dits points ; c) envoi simultané d'au moins les deux signaux récupérés sur un spectromètre multicanal délivrant les spectres Raman correspondants ; d) détermination à partir des deux spectres, de la composition chimique du mélange en chacun des deux points ; e) répétition de la séquence d'étapes a, b, c et d de façon à reconstituer les profils de concentration des deux isomères contenus dans le mélange, et f) comparaison des profils de concentration obtenus à des profils de concentration de référence et on agit sur au moins une variable opératoire du procédé de séparation pour le réguler.

L'article « Optimal operation of simulated moving bed chromatographic processes by means of simple feedback control » par H. Schramm, S. Grüner, A. Kienle, Journal of chromatography A, 1006 (2003), 3-13 décrit deux méthodes pour contrôler un dispositif de Lit Mobile Simulé (LMS ou « Simulated Moving Bed » en anglais). Selon une première méthode de contrôle par inférence, le dispositif est équipé de capteurs UV, chacun des capteurs étant disposés dans une zone de séparation. Le profil UV est enregistré en tant que somme des concentrations des composants dans le dispositif. En particulier quatre fronts de séparation différents peuvent être observés dans les concentrations ainsi que dans le profil UV. De la différence entre les signaux mesurés et des points de consignes enregistrés, des contrôleurs PI calculent des ratios de débit m pour chacune des zones de séparation. Des débits dans chacune des zones sont ensuite calculés pour contrôler le dispositif à Lit Mobile Simulé. On obtient ainsi une régulation individuelle des quatre zones de séparation. Les points de consignes sont par exemple tels que les fronts des profils de concentration soient situés au milieu des différentes zones de séparation. Les auteurs expliquent que le contrôle par interférence est à activer lorsque le système est stabilisé et que les puretés des fractions soutirées sont satisfaisantes.

Parce que le contrôle par interférence n'est pas suffisant pour ajuster les puretés, le document décrit une deuxième méthode de contrôle basée sur la connaissance d'un modèle. A l'opposé du contrôle par interférence, le contrôle sur la base d'un modèle ne se satisfait pas d'un profil UV et l'accès aux concentrations est nécessaire par l'intermédiaire d'un observateur d'état. Le modèle permet de calculer par simulation les meilleures conditions opératoires pour satisfaire les contraintes de puretés des produits de sortie. Le modèle est ensuite réajusté en fonction des résultats de puretés obtenus au cours de la séparation. La limitation de cette méthode se trouve dans la précision de l'observateur - d'état permettant à partir du profil UV de remonter au profil de concentration et dans la connaissance du modèle de la séparation, qui nécessite d'être déterminé à l'avance d'une façon aussi précise que possible.

Le document US-A-5 457 260 décrit un procédé pour contrôler de manière continue au moins une caractéristique d'un procédé à Lit Mobile Simulé (LMS ou « Simulated Moving Bed » en anglais). Le Lit Mobile Simulé est réalisé à l'aide d'une vanne rotative permettant le décalage de l'injection de charge et d'éluant et le décalage du soutirage de l'extrait et du raffinat sur un cycle de fonctionnement. Les caractéristiques contrôlées peuvent être la pureté ou le rendement du composant présentant un intérêt. Le procédé comprend les étapes de (a) détermination de la concentration d'au moins un composant dans le fluide en circulation au minimum en trois positions de la vanne au sein d'un cycle de vanne (b) détermination de la valeur courante de la caractéristique en utilisant l'ensemble des concentrations déterminées au sein d'un cycle de vanne ; (c) ajustement de la période de rotation de la vanne et des débits selon un algorithme ; (d) répétition des étapes a) à c) jusqu'à ce que l'écart entre la valeur courante de la caractéristique et une valeur consigne soit inférieur à un seuil.

L'inconvénient est que le temps de mise en oeuvre est important puisque le résultat n'est obtenu qu'après de nombreux essais et qu'il n'est exploitable que dans le domaine des tests effectués. Egalement, cette méthode est d'une précision limitée, celle de la modélisation des non linéarités en général.

Le document US-A-2005 107895 décrit une méthode de régulation utilisant le contrôle MPC (« Model Prédictive Control »). Un modèle approximé du procédé permet de prédire, à partir de mesures de concentration des produits de sorties, l'évolution future du système. Selon l'évolution envisagée du système, et des paramètres physiques de celui-ci, un optimiseur sélectionne les paramètres opératoires à appliquer afin d'atteindre les spécifications fixées sur les produits de sortie. Une fois les spécifications atteintes, les paramètres opératoires sont de nouveau ajustés afin d'augmenter les performances du procédé.

La méthode nécessite un algorithme complexe ainsi qu'un modèle de représentation de la séparation.

Le document FR-A-2 762 793 (US-A-5 902 486) décrit un procédé pour le contrôle d'un système (ou unité) de séparation de constituants à Lits Mobiles Simulés comprenant une boucle fermée constituée par l'interconnexion en série de lits contenant de la matière solide adsorbante, répartis en plusieurs zones délimitées par des points d'injection et des points d'extraction de fluides, des moyens d'injection de fluides dans la boucle, des moyens d'extraction de fluides hors de la boucle, des moyens de permutation des points d'injection et des points d'extraction, permettant de simuler le déplacement des lits à contre-courant, et des moyens de mesure de diverses variables (telles que des concentrations, des débits, la période de permutation des vannes etc.).

Le procédé comporte (a) la mesure de variable opératoires telles que les débits ou la période et la mesure de concentrations de certains constituants nécessaires au calcul de variables commandées en un nombre de points de la boucle de séparation au moins égal à deux ; (b) la détermination, à partir de valeurs courantes de variables mesurées, et en utilisant un modèle non-linéaire du fonctionnement du système de séparation de ratios (Rk) indicatifs respectivement du rapport dans chacune des différentes zones, entre les débits de fluides (QK) et les débits simulés de matière adsorbante (Qs) de façon à amener ou ramener les variables commandées (telles que la pureté ou le rendement) jusqu'à des valeurs de consignes déterminées; et (c) la détermination à partir de ces ratios (Rk), des valeurs à donner aux variables opératoires (débits ou période).

Ce procédé a également l'inconvénient d'utiliser un modèle de séparation.

Le document DE-A-198 42 550 décrit une méthode d'optimisation d'un procédé chromatographique de type à Lit Mobile Simulé pour l'estimation de paramètres de séparation. Dans cette méthode, des mesures sont faites sur chacune des lignes de sorties afin de déterminer une caractéristique telle que la concentration. A l'aide de ces mesures et d'un algorithme mathématique, le comportement physique du système est déterminé.

Le document EP-A-0 878 222 décrit un dispositif de séparation SMB comprenant une pluralité de lits de garnissage connectés, dans lequel un fluide est mis en circulation. Un ou plusieurs détecteurs de concentration sont placés sur le passage de circulation du fluide. Le(s) détecteur(s) de concentration est couplé à un ordinateur qui permet de modifier automatiquement les conditions opératoires en accord avec les fluctuations de concentrations.

Le brevet US 4,182,633 concerne une amélioration d'un procédé SMB. Dans ce procédé on mesure la concentration d'au moins un composé dans un fluide.

Le brevet US 3,268,605 concerne un système contrôlé pour maximiser l'efficacité de séparation d'un procédé SMB en opérant en continu en présence d'un fluide mis en circulation de manière continue dans la zone de contact.

Il y a donc un besoin pour un procédé de séparation qui soit plus simple et plus rapide à mettre en oeuvre et qui ne fasse pas appel à un modèle de séparation.

Pour cela l'invention propose un procédé de séparation de fraction d'un mélange dans un dispositif de chromatographie ayant
- une ou plusieurs colonnes en boucle, une phase mobile en circulation déplaçant les fractions du mélange à séparer dans ladite boucle,
- des points d'injection de mélange et d'éluant,
- des points de collectes de fractions,
- des organes de séquençage des points d'injection et de collecte,
le procédé comprenant des étapes de collecte des fractions, d'injection de mélange entre deux collectes successives dans l'intervalle où les fractions du mélange sortent de la ou les colonnes et sont envoyées vers l'entrée suivante, le procédé comprenant en outre les étapes de :
- contrôle en un noeud du dispositif, de l'historique d'une variable spécifique des fractions du mélange à séparer,
- détection d'un point caractéristique de l'historique, le point caractéristique étant entre deux étapes successives de collecte de fraction,
- comparaison de la position du point caractéristique par rapport à une position cible,
- réglage de la quantité de la phase mobile modifiant la position du point caractéristique pour faire coïncider la position du point caractéristique avec la position cible.

Selon une variante, le dispositif utilisé dans le procédé de l'invention comprend au moins une colonne de chromatographie et des points de collecte où sont collectées les fractions, l'une des fractions, l'extrait, est plus retenue dans la colonne que l'autre fraction, le raffinat, moins retenue dans la colonne.

Selon une variante, le dispositif utilisé dans le procédé de l'invention comprend des points d'injection de mélange et d'éluant et des points de collecte de fractions, des organes de séquençage des points d'injection et de collecte, le procédé comprenant le séquençage des points d'injection et de collecte jusqu'à leur position d'origine dans le dispositif au bout d'un cycle de fonctionnement.

Selon une variante, l'historique est contrôlé sur un cycle de fonctionnement du dispositif.

Selon une variante, l'historique est contrôlé sur moins d'un cycle, jusqu'à l'apparition du point caractéristique de l'historique.

Selon une variante, le contrôle de l'historique est réalisé à une fréquence correspondant à un nombre entier de cycles de fonctionnement du dispositif.

Selon une variante, le contrôle de l'historique est réalisé en un seul noeud.

Selon le procédé de l'invention, un seul point caractéristique est détecté entre deux collectes successives, la durée de chaque collecte étant incluse, encadrant l'injection de mélange à traiter.

Selon une variante du procédé de l'invention, au cours de l'étape de réglage, la quantité de phase mobile est modifiée par la variation du débit moyen de phase mobile.

Selon une variante, le dispositif utilisé dans le procédé de l'invention a un fonctionnement cyclique, et, au cours de l'étape de réglage, la quantité de phase mobile est modifiée par la variation du temps de cycle.

Selon une variante du procédé selon l'invention, le procédé comprend en outre, les étapes de : - mesure de la pureté d'au moins une fraction collectée, - comparaison de la pureté mesurée avec une pureté prédéterminée, le procédé comprenant en outre une étape de définition du point cible en fonction de la différence entre la pureté mesurée et la pureté prédéterminée.

Selon une variante du procédé selon l'invention, le procédé comprend en outre les étapes de - mesure de la pureté d'au moins deux fractions collectées, - comparaison de la pureté mesurée des fractions avec respectivement une pureté prédéterminée, le procédé comprenant en outre une étape de définition de la position cible en fonction de la différence entre les puretés mesurées et les puretés prédéterminées.

Selon une variante du procédé selon l'invention, au cours de l'étape de définition de la position cible, la position cible est définie suite à la modification de la position de l'injection de mélange sur l'historique.

Selon une variante du procédé selon l'invention, le procédé comprend en outre, les étapes de : - mesure de la pureté d'au moins une fraction collectée, - comparaison de la pureté mesurée avec une pureté prédéterminée, le procédé comprenant en outre une étape de modification de la quantité de mélange injecté en fonction de la différence entre la pureté mesurée et la pureté prédéterminée.

Selon une variante du procédé selon l'invention, le procédé comprend en outre les étapes de - mesure de la pureté d'au moins deux fractions collectées, - comparaison de la pureté mesurée des fractions avec respectivement une pureté prédéterminée, le procédé comprenant en outre une étape de modification de la quantité de mélange injecté en fonction de la différence entre les puretés mesurées et les puretés prédéterminées.

Selon une variante du procédé selon l'invention, la quantité de mélange est augmentée si les puretés mesurées sont supérieures aux puretés prédéterminées.

Selon une variante du procédé selon l'invention, la quantité de mélange est diminuée si les puretés mesurées sont inférieures aux puretés prédéterminées.

Selon l'invention, le procédé comprend en outre des étapes de - contrôle en un noeud du dispositif, de l'historique d'une variable spécifique des fractions du mélange à séparer, - détection d'un deuxième point caractéristique de l'historique, dédié à l'adsorption ou à la collecte d'une fraction du mélange moins retenue, situé entre l'étape de soutirage ou de collecte de fraction moins retenue et l'étape d'injection d'éluant ; - comparaison de la position du point caractéristique par rapport à une position cible, - réglage de la quantité de la phase mobile modifiant la position du point caractéristique pour faire coïncider la position du point caractéristique avec la position cible.

Selon une variante du procédé selon l'invention, le dispositif comprend une zone en entrée de laquelle une fraction moins retenue est soutirée et en sortie de laquelle de l'éluant est injecté, le procédé comprenant, à l'étape de réglage, le réglage du débit moyen dans cette zone pour faire coïncider la position du point caractéristique avec la position cible.

Selon une variante du procédé selon l'invention, au cours de l'étape de réglage, la durée de l'étape de collecte de la fraction la moins retenue est modifiée pour faire coïncider la position du point caractéristique avec la position cible.

Selon une variante du procédé selon l'invention, le procédé comprend en outre des étapes de - contrôle en un noeud du dispositif, de l'historique d'une variable spécifique des fractions du mélange à séparer, - détection d'un troisième point caractéristique de l'historique, dédié à la désorption ou à la collecte d'une fraction du mélange plus retenue, situé entre l'étape d'injection d'éluant et l'étape de collecte ou de soutirage de fraction plus retenue ; - comparaison de la position du point caractéristique par rapport à une position cible ; - réglage de la quantité de la phase mobile modifiant la position du point caractéristique pour faire coïncider la position du point caractéristique avec la position cible.

Selon une variante du procédé selon l'invention, le dispositif comprend une zone en entrée de laquelle de l'éluant est injecté et en sortie de laquelle une fraction plus retenue est soutirée, le procédé comprend, à l'étape de réglage, le réglage du débit moyen dans cette zone pour faire coïncider la position du point caractéristique avec la position cible.

Selon une variante du procédé selon l'invention, au cours de l'étape de réglage, la durée de l'étape de collecte de la fraction la plus retenue est modifiée pour faire coïncider la position du point caractéristique avec la position cible.

Selon une variante du procédé de l'invention, les noeuds d'observations sont choisis en différents emplacements ou aux mêmes emplacements.

Selon une variante du procédé de l'invention, les historiques sont différents ou sont les mêmes.

Selon une variante du procédé de l'invention, les variables spécifiques sont différentes ou sont les mêmes.

Selon une variante du procédé de l'invention, le contrôle est réalisé en un noeud autre qu'en un point de collecte de fractions.

Selon une variante du procédé selon l'invention, le point caractéristique est choisi parmi le groupe consistant en un point d'inflexion de l'historique, en un seuil de l'historique, en un extremum de l'historique, en une valeur nulle, en une pente définie de l'historique.

Selon une variante du procédé selon l'invention, la variable spécifique est choisie parmi le groupe consistant en le pouvoir rotatoire, en l'adsorption de rayonnement spectroscopique, en l'émission de rayonnement spectroscopique, en la densité, en l'indice de réfraction, en la conductivité, en pH.

Selon une variante du procédé selon l'invention, au cours de l'étape de réglage, le réglage du volume de phase mobile est effectué par réglage du débit de collecte d'une fraction.

Selon une variante, l'injection de mélange est continue.

Selon une variante, le dispositif comprend plusieurs colonnes connectées en série.

Selon une variante, le dispositif chromatographique est adapté au procédé VariCol, ou au procédé Lit Mobile Simulé.

Selon une variante, le dispositif utilisé dans le procédé de l'invention comprend une zone en entrée de laquelle est soutirée une fraction et en sortie de laquelle le mélange à séparer est injecté, le procédé comprenant, à l'étape de réglage, le réglage du débit moyen de cette zone pour faire coïncider la position du point caractéristique avec la position cible.

Selon une variante du procédé selon l'invention, l'injection de mélange est discontinue.

Selon une variante, le dispositif comprend une ou deux colonnes.

Selon une variante du procédé selon l'invention, le dispositif est adapté au procédé CycloJet.

Selon une variante du procédé selon l'invention, le procédé est automatique.

L'invention se rapporte aussi à un dispositif de séparation de fraction d'un mélange par chromatographie comprenant la mise en oeuvre du procédé précédent.

Selon une variante du procédé selon l'invention, le dispositif de chromatographie comprend - une logique de commande adaptée à mettre en oeuvre le procédé précédent.

Selon une variante du procédé selon l'invention, le dispositif comprend des détecteurs situés sur la ligne de recyclage.

Selon une variante du procédé selon l'invention, le dispositif comprend des détecteurs déportés.

Selon une variante du procédé selon l'invention, le dispositif comprend un appareil analytique, la pureté des fractions est mesurée par l'appareil analytique.

L'invention se rapporte aussi à l'utilisation du procédé précédent pour la séparation et/ ou la purification de mélange d'intérêts.

L'invention se rapporte aussi à l'utilisation du procédé précédent pour la séparation et/ ou la purification d'énantiomères.

L'invention se rapporte aussi à l'utilisation du procédé précédent pour la séparation et/ ou la purification de molécules.

L'invention se rapporte aussi à l'utilisation du procédé précédent pour la séparation et/ ou la purification de protéines.

L'invention se rapporte aussi à l'utilisation du procédé précédent pour la séparation et/ ou la purification d'anticorps.

L'invention se rapporte aussi à l'utilisation du procédé précédent pour la séparation et/ ou la purification de composés pharmaceutiques.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une représentation d'un dispositif à Lit Mobile Simulé;
- figures 2 à 5, des représentations du dispositif CycloJet ;
- figures 6 à 11, des exemples de fonctionnement et de mouvement des fractions du mélange à séparer dans un dispositif à injection continue ;
- figures 12 à 16, des exemples de fonctionnement et de mouvement des fractions du mélange à séparer dans un dispositif à injection discontinue ;
- figures 17 à 23, des exemples de réalisation du contrôle de variables spécifiques ;
- figures 24 à 50, des illustrations d'exemples de fonctionnement.

L'invention se rapporte à un procédé de séparation de fractions d'un mélange à séparer, dans un dispositif de chromatographie. Le dispositif a une ou plusieurs colonnes de chromatographie en boucle ; une phase mobile circule dans le dispositif et déplace les fractions du mélange à séparer. Le procédé comprend des étapes de collecte de fractions et d'injection de mélange ; l'injection de mélange a lieu entre deux collectes successives d'un produit ou d'un ensemble de produits peu retenus et d'un produit ou d'un ensemble de produits plus retenus, alors que les fractions du mélange en cours de séparation sortent de la ou les colonnes et sont envoyées vers l'entrée suivante de colonne.

Le mode de collecte des fractions peut être effectué de différente manière, on parlera plus précisément de soutirage lorsque qu'un prélèvement partiel de phase mobile est effectué en sortie de colonne, le reste étant injecté dans la colonne suivante et on parlera de collecte totale lorsque c'est l'intégralité du flux de phase mobile sortant d'une colonne qui est collectée.

Le procédé comprend en outre une étape de contrôle, en un noeud du dispositif, de l'historique d'une variable spécifique des fractions du mélange à séparer. Le procédé comprend aussi une étape de détection d'un point caractéristique de l'historique, de préférence sur l'intervalle de temps délimité par le début de la collecte d'une fraction moins retenue et la fin de la collecte suivante de fraction plus retenue à proximité du noeud. Le procédé comprend ensuite une étape de comparaison de la position du point caractéristique par rapport à une position cible, puis une étape de réglage de la quantité de phase mobile modifiant la position du point caractéristique pour faire coïncider la position du point caractéristique avec la position cible.

L'invention permet de simplifier le procédé de séparation des fractions car le procédé permet de s'adapter aux variations des conditions de réalisation d'une séparation par chromatographie ; en particulier, le procédé ne nécessite pas la reconstitution d'un modèle de fonctionnement du dispositif. Le procédé permet de contrôler et de régler automatiquement le fonctionnement du dispositif de séparation. Le procédé permet de réagir rapidement à une éventuelle perturbation, sur un dispositif stable ou en cours de stabilisation.

A titre d'exemple de dispositif, on peut citer le dispositif à Lit Mobile Simulé (« LMS » ou « Simulated Movig Bed » (« SMB ») en anglais ; on utilisera par la suite la terminologie SMB), le dispositif VariCol ou le dispositif CycloJet.

Les colonnes chromatographiques peuvent contenir des phases stationnaires liquides ou solides et éluées par un fluide à l'état gazeux, liquide voire supercritique. Le procédé s'applique à des dispositifs comprenant au moins une colonne de chromatographie remplie d'une phase stationnaire et comprenant des points d'injection de mélange d'au moins deux espèces et d'éluant en entrée de colonne et des points de collecte de fractions ; les dispositifs comprennent aussi des organes de séquençage des points d'injection et de collecte. En particulier, le séquençage de ces points d'injection et de collecte a lieu sur un cycle de fonctionnement du dispositif. Par la suite, un « fonctionnement cyclique » ou « cycle » désigne le temps au bout duquel les points d'injection et de collecte ont été séquencés jusqu'à revenir à la position initiale dans le dispositif. Au bout d'un cycle, le dispositif est à nouveau à sa configuration initiale. Un cycle comporte autant de périodes que de colonnes dans la boucle de séparation ainsi le cycle d'un dispositif SMB ou VariCol de 8 colonnes sera produit de 8 périodes. Dans le cas d'un CycloJet à une colonne le cycle se compose d'une unique période ; on peut alors assimiler temps de cycle et période.

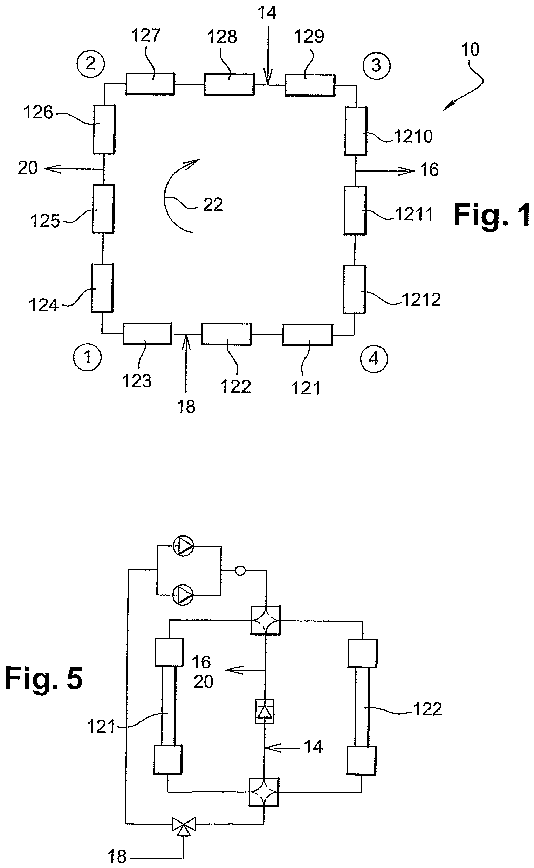

La figure 1 montre un dispositif 10 permettant de mettre en oeuvre un procédé SMB à quatre zones. Le dispositif 10 comporte un ensemble de colonnes chromatographiques ou tronçons de colonnes chromatographiques contenant une phase stationnaire ou adsorbant, les colonnes sont montées en série et en boucle fermée. Les colonnes ont une entrée et une sortie, la sortie d'une colonne étant reliée à une entrée suivante de colonne. A titre d'exemple, douze colonnes 121 à 1212 sont représentées. La boucle comporte au moins un point d'injection 14 de mélange (charge), un point de collecte 16 de fraction enrichie en produit peu retenu par la phase stationnaire (fraction appelée raffinat), un point d'injection 18 d'un éluant et un point de collecte 20 de fraction enrichie en produit moins retenu par la phase stationnaire (fraction appelée extrait). Le point d'injection 14 de mélange est entre les colonnes 128 et 129, le point de collecte 16 de raffinat est entre les colonnes 1210 et 1211, le point d'injection 18 d'éluant est entre les colonnes 122 et 123 et le point de collecte 20 d'extrait est entre les colonnes 125 et 126.

Le dispositif fonctionne par séquençage synchrone, c'est-à-dire par décalage synchrone de l'ensemble des points d'injection et de soutirage d'une colonne ou tronçon de colonne dans une direction 22 définie par rapport à la direction de l'écoulement d'un fluide principal circulant à travers la boucle. Le décalage de l'ensemble des points d'une colonne ou tronçon de colonne correspond à une période ; au bout d'un cycle tous les points sont revenus à leur position initiale, le dispositif ayant un fonctionnement cyclique. Un cycle comporte autant de périodes que de colonnes ou tronçon de colonne.

Le procédé VariCol diffère du procédé SMB en ce qu'au cours d'un cycle, on effectue le séquençage ou décalage des différents points d'injection et de soutirage d'une colonne ou tronçon de colonne à des temps différents de manière que la longueur des zones définies par lesdits différents points soit variable. Le séquençage ou décalage des points est asynchrone. Au bout d'un cycle l'ensemble des points sont revenus à leur position initiale, le dispositif ayant un fonctionnement cyclique. Une période correspond au temps au bout duquel l'ensemble des points ont été décalés d'une colonne ou tronçon de colonne. Un cycle comporte autant de périodes que de colonnes ou tronçons de colonne.

Dans les dispositifs permettant de mettre en oeuvre les procédés SMB et/ou VariCol, on peut déterminer entre un point d'injection et un point de collecte ou vice-versa une zone chromatographique ; ainsi on peut définir une zone 1 entre le point d'injection d'éluant 18 et le point de collecte 20 d'extrait, une zone 2 entre le point de collecte 20 d'extrait et le point d'injection 14 de mélange, une zone 3 entre le point d'injection 14 de mélange et le point de collecte 16 de raffinat et une zone 4 entre le point de collecte 16 de raffinat et le point d'injection 18 d'éluant. Les zones 2 et 3 forment une zone de séparation, la zone 1 forme une zone de désorption et la zone 4 forme une zone d'adsorption.

Les procédés SMB et VariCol peuvent être mis en oeuvre avec une configuration à moins de quatre zones, par exemple à trois zones (par élimination de la zone 4). Dans ce dernier cas, le dispositif fonctionne en boucle ouverte, l'ensemble du fluide issu de la zone 3 étant collecté au point de collecte 16 de raffinat.

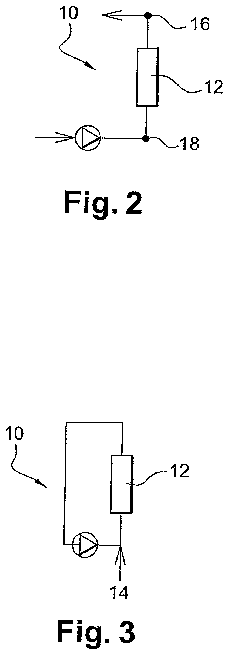

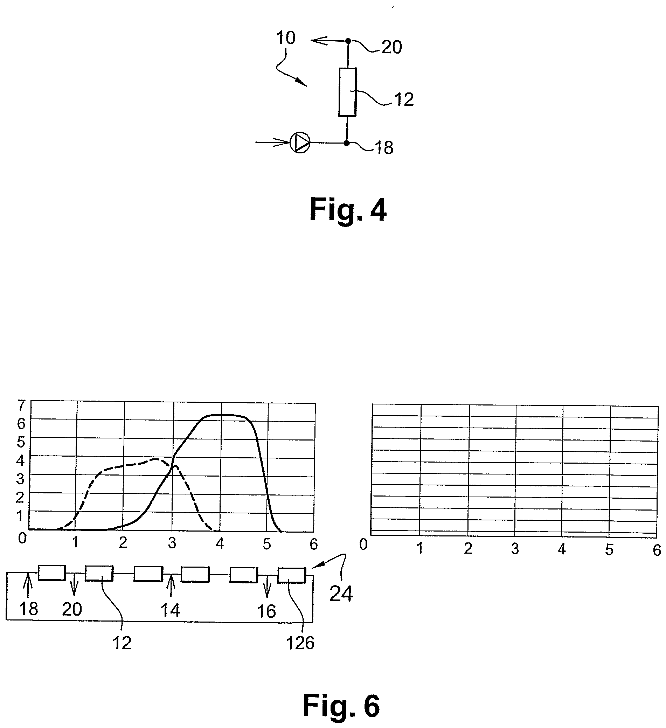

Les figures 2 à 4 montrent un dispositif 10 permettant de mettre en oeuvre un procédé CycloJet. Ce dispositif peut comporter une seule colonne ; il est décrit dans le document EP-A-0 981 399. La figure 2 montre une colonne 12 de chromatographie remplie d'une phase stationnaire. Le dispositif 10 comprend des points d'injection 18 d'éluant et de collecte totale 16 de fraction. Sur la figure 2, le dispositif 10 est en cours de réalisation d'une étape de collecte totale d'une fraction, par exemple une fraction enrichie en produit peu retenu par la phase stationnaire, aussi appelée raffinat. Sur la figure 3, une étape de recyclage est représentée, la sortie de la colonne 12 étant reliée à l'entrée de la colonne 12 ; au cours de cette étape, une injection de mélange a lieu au point 14. Au cours de cette étape la colonne est dans une boucle fermée, la sortie de la colonne étant reliée à l'entrée suivante de colonne, en l'occurrence de la même colonne. Le point d'injection 14 est par exemple une boucle d'injection ; la boucle d'injection est chargée en mélange et l'injection est réalisée en dérivant le fluide en sortie de la colonne au travers de la boucle avant de réinjecter le fluide en entrée de colonne, ce qui permet d'insérer un volume de mélange dans le mélange en cours de séparation. La figure 4 montre un point de collecte totale 20 de fraction. Le dispositif 10 est en cours de réalisation d'une étape de collecte totale d'une autre fraction, par exemple une fraction enrichie en produit plus retenu par la phase stationnaire, aussi appelée extrait.

Ainsi, entre les figures 2 à 4, les points d'injection 14 et 18 ont été séquencés ; en effet, le dispositif comporte alternativement en entrée de colonne l'injection de mélange ou l'injection d'éluant. Egalement, entre les figures 2 et 4, les points de collecte 16 et 20 ont été séquencés ; en effet, en sortie de colonne 12, le dispositif comporte le point de collecte 16 de raffinat, lorsqu'il s'agit de collecter le raffinat, ou le dispositif comporte le point de collecte 20 d'extrait, lorsqu'il s'agit de collecter l'extrait.

Le dispositif CycloJet peut être aussi appliqué à deux colonnes ; il est décrit dans le document EP-A-0 876 936. La figure 5 montre le dispositif CycloJet à deux colonnes, dans le lequel on applique un procédé cyclique chromatographique préparatif, comprenant, en régime permanent :
(a) l'établissement d'un profil chromatographique à circulation en forme de huit, entre deux colonnes chromatographiques 121 et 122, sachant que ledit profil chromatographique ne passe jamais par une pompe d'élution ;
(b) injection discontinue et périodique d'un mélange au point 14, comprenant au moins deux fractions, dans ledit profil de circulation ; et
(c) collecte, de façon discontinue et périodique, d'au moins deux fractions enrichies depuis ledit profil de circulation, aux points 16 et 20.

Au point 18 est injecté de l'éluant. Les colonnes sont en boucle, la sortie d'une colonne est reliée à l'entrée suivante de colonne.

Le principe repose donc sur l'utilisation d'un système de recyclage externe permettant d'éviter le transit de la fraction recyclée dans la pompe d'élution.

Les dispositifs permettant de mettre en oeuvre les procédés SMB et VariCol sont des dispositifs à injection continue dans le sens où l'injection de mélange est faite sur l'ensemble d'un cycle ; on peut aussi citer des dispositifs du type SMB à trois et deux zones. D'autres dispositifs comme le CycloJet sont des dispositifs à injection discontinue dans le sens où l'injection n'est pas faite sur l'ensemble d'un cycle mais pendant une durée totale inférieure à un cycle ; on peut aussi citer des dispositifs tels que le SSMB (« Sequential Simulated Moving Bed » ou LMS séquentiel en français), le iSMB, le Powerfeed (PowerFeed opération of simulated moving bed units : changing flow-rates during the switching interval ; Ziyang Zhang, Marco Mazzotti, Massimo Morbidelli ; Journal of Chromatography A, 1006 (2003) 87-99), le ModiCon (Improved opération of simulated moving bed processes through cyclic modulation of feed flow and feed concentration ; H. Schramm, A. Kienle, M. Kaspereit, A. Seidel-Morgenstern ; Chemical Engineering Science 58 (2003) 5217-5227), un procédé multi-colonnes chromatographiques avec une étape de reconcentration décrit dans le brevet FR2846252 ou tel que l'objet de la demande de brevet FR 0507952 déposée en France le 26 juillet 2005.

Ces dispositifs permettent de séparer des fractions F1, F2, F3,... d'un mélange (ou charge) à séparer. Le mélange peut être binaire, c'est-à-dire comportant deux produits ; toutefois, le mélange peut aussi contenir plus de deux produits.

Par ailleurs, les dispositifs décrits sont caractérisés par le fait qu'il s'agit de dispositifs à accumulation. Il y a accumulation dans un dispositif lorsque l'injection de mélange est intercalée ou additionnée à un profil de concentration non nulle passant de la sortie à l'entrée d'une colonne. L'injection de mélange a lieu alors que les fractions du mélange en cours de séparation sortent de la ou des colonnes et sont envoyées vers l'entrée suivante de colonne. Dans les dispositifs à injection continue du type SMB ou VariCol, l'injection de mélange s'effectue de façon continue entre deux colonnes, par exemple à l'aide d'une pompe d'injection. L'injection s'additionne à ce qui sort de la colonne avant d'entrer dans la colonne suivante. Le mélange ainsi injecté s'additionne donc à un profil de concentration non nulle ; il y alors accumulation. Dans un dispositif CycloJet à une colonne, l'injection s'effectue alors que les produits sortant de la colonne 12 sont renvoyés vers l'entrée de cette même colonne 12. Un volume de fluide contenant le mélange à séparer est alors intercalé entre la sortie et l'entrée de colonne. Le mélange ainsi injecté s'intercale donc dans un profil de concentration non nulle ; il y a alors accumulation. Dans les dispositifs multi-colonnes comme par exemple un CycloJet à deux colonnes ou tel que l'objet de la demande de brevet FR 0507952 déposée en France le 26 juillet 2005, l'injection s'effectue alors que les fractions sortant d'une colonne sont renvoyées vers l'entrée de la colonne suivante. On peut utiliser une pompe d'injection en injectant dans une colonne alors que par exemple, l'élution de la colonne précédente est stoppée. On peut également utiliser une boucle d'injection. Dans les deux cas, le mélange ainsi injecté s'intercale donc sur un profil de concentration non nulle ; il y alors accumulation.

On appelle «profil de concentration» l'état de concentration des fractions du fluide s'écoulant dans le dispositif, état considéré à un instant « t » sur l'ensemble du dispositif. Le document FR-2 699 917 (US-A-5 569 808) cité au début de la présente description décrit des étapes permettant de reconstituer un profil de concentration. Notamment, pour reconstituer le profil de concentration, au moins deux capteurs sont disposés dans une zone de séparation du dispositif.

Un profil de concentration est différent d'un « historique » d'une variable spécifique ; on appelle « historique », l'état ou l'évolution dans le temps d'une variable spécifique des fractions du mélange en mouvement dans le dispositif, état considéré pendant une durée ou un temps déterminé en un point particulier du dispositif. Ainsi, en se plaçant en un point particulier du dispositif, que l'on peut appeler « noeud d'observation », on peut contrôler une variable spécifique des fractions du mélange à séparer s'écoulant au noeud d'observation.

La durée pendant laquelle on détermine l'état de la variable spécifique est par exemple d'un cycle de fonctionnement. A la fin du cycle, l'historique peut être réinitialisé et recommencé. La durée peut aussi être plus courte, comme cela sera expliqué par la suite.

L'abscisse d'un historique peut s'exprimer en différentes unités :
- le temps brut : l'axe part alors de 0 et se termine à la fin effective du temps de cycle ;
- le temps réduit défini par le brut divisé par le temps de cycle : dans ce cas, l'axe de l'historique est toujours entre 0 et 1 ;
- un indice d'avancement dans le cycle : c'est la généralisation du temps brut divisé par le temps de cycle ; ceci est intéressant dans le cas où il y aurait des arrêts programmés de débits d'élutions dont la durée peut être variable.

Le noeud d'observation est un point du dispositif qui peut être librement choisi. De préférence, le noeud d'observation est un point du dispositif autre qu'un point de collecte de fraction ; le noeud d'observation est par exemple situé entre la sortie de la ou des colonnes et le plus proche point de collecte de fraction. Les dispositifs ayant un fonctionnement cyclique, on choisira de préférence également, un point où se succèdent les passages de collecte des fractions enrichie en l'une des fractions. Par exemple, dans un dispositif de type CycloJet, à une ou deux colonnes, le noeud d'observation est en sortie de colonne, avant les organes de collecte, car, dans les procédés où la collecte est totale, il n'y a pas de liquide passant d'une colonne à l'autre ; dans un dispositif de type SMB ou VariCol, le noeud d'observation est par exemple en un point situé entre la sortie et l'entrée de deux colonnes qui se suivent dans le dispositif.

Le procédé de régulation des procédés de séparation va maintenant être décrit. Dans un premier temps, les étapes d'une première routine, que l'on peut appeler routine de positionnement du point caractéristique, vont être décrites. Le terme routine désigne la mise en oeuvre d'un principe de réglage du dispositif chromatographique. Cette mise en oeuvre peut prendre par exemple la forme d'un algorithme informatique commandant un automate, de façon plus général, il s'agit d'une procédure visant à accomplir une tache particulière. Dans la suite de la description de la présente invention, plusieurs routines indépendantes sont présentées avec chacune un rôle défini.

Selon une étape du procédé, on se place en un noeud du dispositif et l'on fait un contrôle de l'historique d'une variable spécifique des fractions du mélange à séparer dans le dispositif. Ainsi, on contrôle l'état d'une variable spécifique. Durant la première routine, la variable spécifique n'est pas la concentration ou la pureté elle-même des fractions, ou en particulier n'est pas une valeur de la concentration ou la pureté elle-même des fractions. Ceci présente l'avantage de régler le fonctionnement plus rapidement que si une concentration ou une pureté devait être mesurée ; la rapidité de réglage est en particulier au démarrage du procédé. Par ailleurs, étant donné qu'il n'est pas nécessaire de mesurer la pureté ou la concentration, il n'est pas nécessaire d'étalonner le détecteur. De plus l'avantage de la première routine est qu'il n'est pas utile non plus de suivre toute variation de l'étalonnage au cours du temps ; ainsi, au bout d'un certain temps, il n'est pas utile d'arrêter le procédé pour vérifier que l'étalonnage est toujours correct. Toutefois, il n'est pas nécessaire de dresser physiquement un historique, par exemple par visualisation ou impression de l'historique ; un contrôle sans enregistrement ni visualisation suffit. De préférence, l'étape de contrôle est réalisée en un seul noeud ; ceci permet de limiter l'utilisation de détecteurs et d'éviter d'avoir à considérer la synchronisation des détecteurs, la synchronisation pouvant de plus évoluer dans le temps dans le cas par exemple d'un changement d'état d'une des colonnes du dispositif.

Les figures 6 à 16 montrent le contrôle de l'historique des concentrations des fractions du mélange en mouvement dans le dispositif et s'écoulant au noeud d'observation pour un dispositif à injection continue et discontinue d'un mélange binaire.

Les figures 6 à 11 montrent l'observation des concentrations des fractions du mélange en mouvement dans le dispositif et s'écoulant au noeud d'observation pour un dispositif à injection continue de mélange, en particulier, pour un dispositif SMB. Le SMB comporte six colonnes 121 à 126 ainsi que des points 14, 18 d'injection de mélange et d'éluant et des points 16, 20 de collecte de fractions. Au point 16 est collecté le raffinat et au point 20 est collecté l'extrait. Sur la partie gauche des figures, l'évolution des concentrations internes du dispositif est représentée en relation avec les colonnes du dispositif. On verra donc que le profil de concentration se déplace le long des colonnes, ce qui correspond au déplacement des fractions grâce à la phase mobile ; les colonnes étant en boucle, le profil quittant la colonne 126 réapparaît en colonne 121. On parle ainsi de profil de concentration en circulation. Sur la partie droite des figures, un historique de concentrations est représenté; l'historique est relevé à un noeud d'observation 24 positionné en sortie de colonne 126. Les figures 6 à 11 montre un cycle de fonctionnement du dispositif, comprenant six périodes de durée ΔT (correspondant à six décalages des points d'injection et de collecte). Sur les figures 6 à 11, l'abscisse de l'historique correspond à un temps réduit exprimé en nombre de périodes.

Egalement à titre d'exemple, le mélange considéré est binaire mais peut aussi comporter plus de deux produits. Il est aussi précisé que le profil de concentration est représenté uniquement afin de mieux comprendre l'évolution des variables spécifiques contrôlées au noeud d'observation ; il n'est pas question de reconstituer le profil de concentration.

La figure 6 est le début de cycle à T=ΔT/2. Sur la partie gauche on voit un profil de concentration s'étirant le long de la colonne 121 à la colonne 126. La courbe en trait plein représente l'état de la concentration en produit le moins retenu. La courbe en pointillés représente l'état de la concentration en produit le plus retenu. A la hauteur du point d'injection 14 de mélange, on peut voir un décrochement dans les courbes, ce qui correspond à une injection de mélange dans le profil de concentration. On notera que ce décrochement apparaît aussi dans les figures suivantes, à la hauteur du point d'injection 14 de mélange. Au noeud 24, aucune concentration n'est relevée ; de fait le profil de concentration n'a pas atteint la sortie de la colonne 126.

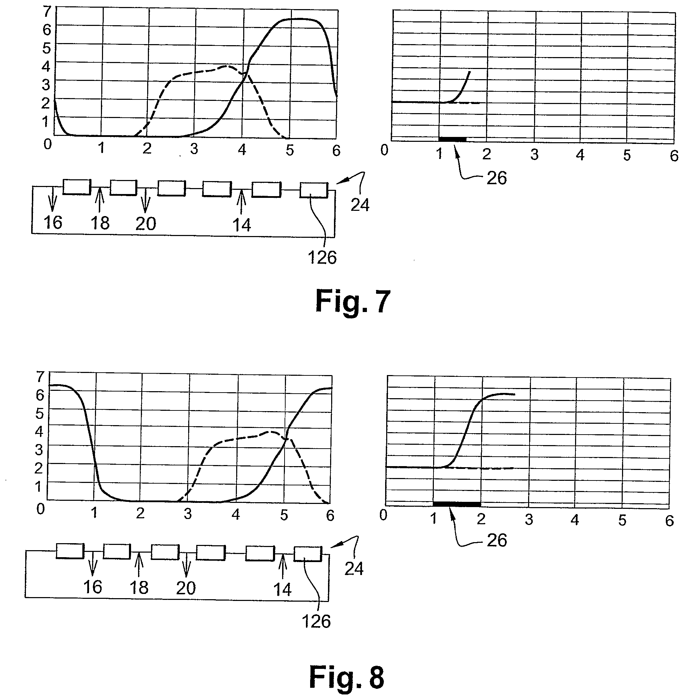

La figure 7 montre le cycle à T=ΔT + ΔT/2. Sur la partie de gauche, le profil de concentration a avancé le long des colonnes. On voit aussi que tous les points 14, 16, 18, 20 ont été décalés d'une colonne, ce qui correspond à une nouvelle période. Au noeud 24, le profil de concentration est tel que la concentration en produit le moins retenu a augmenté ; l'historique montre que la concentration en produit le moins retenu au noeud 24 a augmenté. Par ailleurs, par rapport à la figure 6, le point de collecte 16 de produit le moins retenu a été décalé en sortie de la colonne 126 ; au noeud 24 cette collecte de produit le moins retenu est détectée, l'historique comportant une indication de cette collecte par le trait référencé 26.

La figure 8 montre le cycle à T=2ΔT + ΔT/2. Sur la partie de gauche, le profil de concentration a avancé le long des colonnes. On voit aussi que tous les points 14, 16, 18, 20 ont été décalés d'une colonne, ce qui correspond à une nouvelle période. Au noeud 24, le profil de concentration est tel que la concentration en produit le moins retenu a augmenté puis s'est stabilisée ; l'historique montre que la concentration en produit le moins retenu au noeud 24 a augmenté et s'est stabilisée. De plus, le point de collecte 16 de produit le moins retenu ayant été décalé d'une colonne par rapport à la figure 7, la collecte de produit le moins retenu n'est plus détectée au noeud 24 ; sur la partie droite de la figure 8, le trait 26 est interrompu, montrant que la collecte de produit le moins retenu n'est plus faite en sortie de colonne 126. L'historique montre que la concentration en produit le plus retenu au noeud 24 est encore nulle.

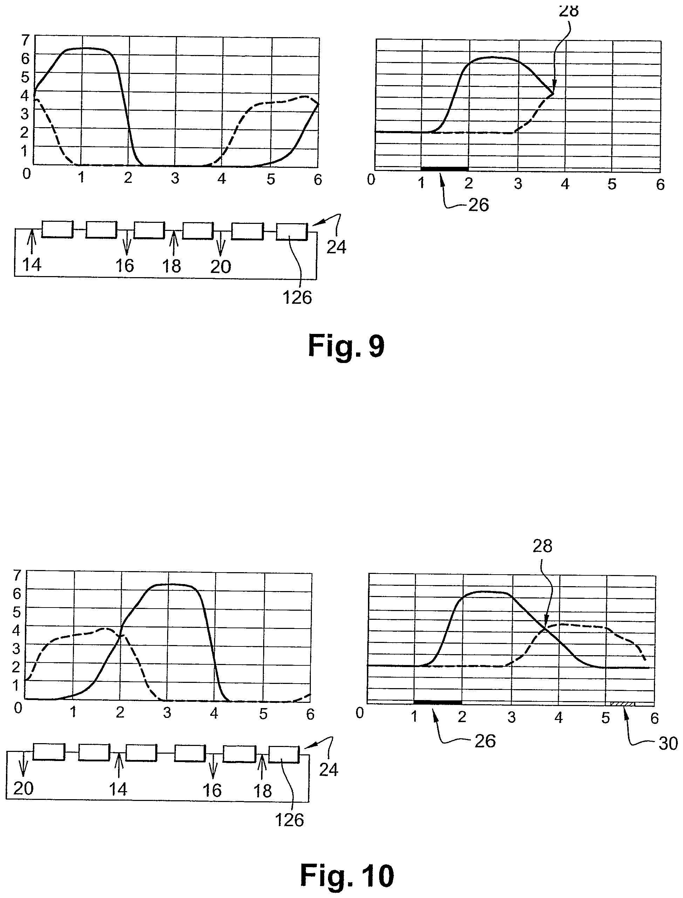

La figure 9 montre le cycle à T=3ΔT+ ΔT/2. Sur la partie de gauche, le profil de concentration a avancé le long des colonnes. On voit aussi que tous les points 14, 16, 18, 20 ont été décalés d'une colonne, ce qui correspond à une nouvelle période. Au noeud 24, le profil de concentration est tel que la concentration en produit le moins retenu a diminué et la concentration en produit le plus retenu augmente ; l'historique montre que la concentration en produit le moins retenu au noeud 24 diminue et que la concentration en produit le plus retenu augmente. L'évolution des concentrations sur l'historique montre aussi que les concentrations au noeud 24 passent par un point 28 où les concentrations sont égales. On voit aussi sur la figure 9 que le point d'injection 14 est en sortie de colonne 126 à proximité du noeud 24.

La figure 10 montre le cycle à T=SΔT+ ΔT/2, soit deux périodes plus tard que la figure 9. Sur la partie de gauche, le profil de concentration a avancé le long des colonnes. On voit aussi que tous les points 14, 16, 18, 20 ont été décalés de deux colonnes. Au noeud 24, le profil de concentration est tel que la concentration en produit le moins retenu est nulle et que la concentration en produit le plus retenu a diminué ; l'historique montre que la concentration en produit le moins retenu au noeud 24 est nulle et que la concentration en produit le plus retenu au noeud 24 a diminué. Par ailleurs, par rapport à la figure 9, le point de collecte 20 d'extrait a été décalé en sortie de la colonne 126 ; au noeud 24 cette collecte de produit le plus retenu est détectée, l'historique comportant une indication de cette collecte par le trait référencé 30.

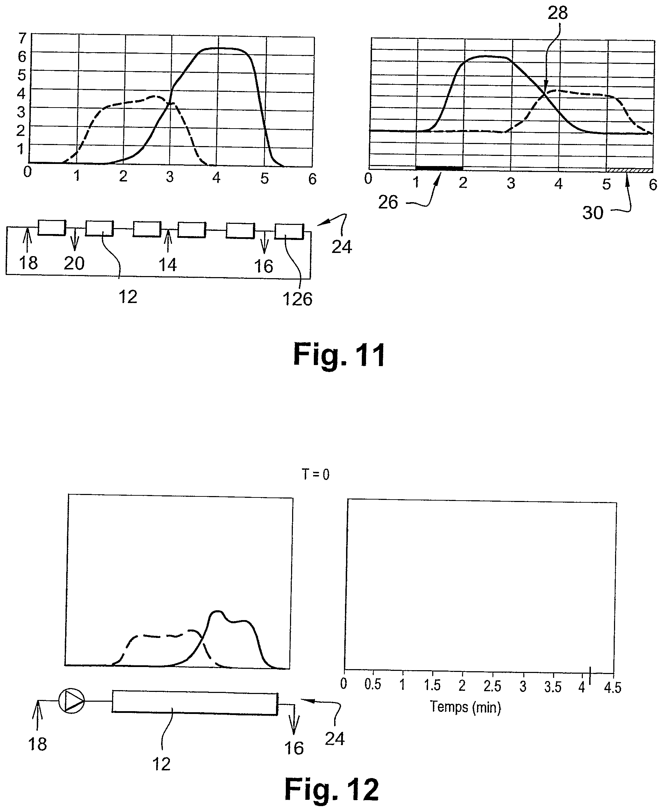

La figure 11 montre le cycle à T=6ΔT+ ΔT/2. c'est-à-dire que le cycle est terminé et qu'un cycle suivant a commencé. Sur la partie de gauche, le profil de concentration a avancé le long des colonnes. On voit aussi que tous les points 14, 16, 18, 20 ont été décalés d'une colonne, ce qui correspond à une nouvelle période. Au noeud 24, le profil de concentration est tel que la concentration de chaque produit est nulle ; l'historique montre ce qui a été contrôlé entre T=0 et T=6ΔT, il apparaît que la concentration des deux produits est nulle au noeud 24. La collecte de produit le plus retenu a été détectée au noeud 24 pendant entre T=5ΔT et T=6ΔT ; sur la partie droite de la figure 11, le trait 30 est interrompu, et l'historique est terminé, un nouvel historique correspondant à un nouveau cycle va commencer après T=6ΔT, dans le cas de cet exemple, la fin de l'historique coïncide avec la fin de la collecte de produit le plus retenu qui n'est plus faite en sortie de colonne 126 après T=6ΔT. Enfin, sur la figure 11, un cycle de fonctionnement est terminé, les points d'injection et de collecte sont dans la position initiale de la figure 6.

En regardant l'historique de la figure 11 au noeud d'observation 24 en sortie de colonne 126, on voit apparaître dans l'ordre :
- une étape de collecte d'une fraction enrichie en un produit peu retenu, par exemple le raffinat ;
- une étape dite d'accumulation, où sortie et entrée de la colonne encadrant le noeud d'observation sont interconnectées, sans collecte, mais avec une injection de mélange de façon continue ;
- une étape de collecte d'une fraction enrichie en un produit peu retenu, par exemple l'extrait.

Sur l'historique de la figure 11, on se rend compte que le point 28 (qui sera plus explicité par la suite) est situé entre les traits 26 et 30 de collecte de raffinat et d'extrait ; ceci montre que ce point apparaît au noeud d'observation 24 alors que le noeud d'observation 24 se trouve dans la zone de séparation du dispositif, entre les points de collecte de raffinat et d'extrait. En effet, les points de collectes et d'injection étant décalés par les organes de séquençage au cours d'un cycle, le noeud d'observation 24, qui lui est fixe, se retrouve successivement dans toutes les zones de séparation, d'adsorption et de désorption.

Il est à noter que la position du noeud 24 en sortie de colonne 126 est un exemple ; si le noeud était placé en une autre position, l'historique serait similaire, mais décalé dans le temps.

Les figures 12 à 16 montrent l'observation des concentrations des fractions du mélange en mouvement dans le dispositif et s'écoulant au noeud d'observation pour un dispositif à injection discontinue de mélange, en particulier, pour un dispositif CycloJet. Le CycloJet comporte une colonne 12 ainsi que des points 14, 18 d'injection de mélange et d'éluant, et des points 16, 20 de collecte de fraction. Au point 16 est collecté le produit le moins retenu et au point 20 est collecté produit le plus retenu. Sur la partie gauche des figures, l'évolution des concentrations internes du dispositif est représentée en relation avec la colonne du dispositif. On verra donc que le profil de concentration se déplace le long de la colonne, ce qui correspond au déplacement des fractions grâce à la phase mobile ; lorsque la sortie de la colonne 12 est susceptible d'être connectée à l'entrée de la colonne 12, le profil sortant de la colonne 12 réapparaît en entrée de colonne 12. On parle ainsi de profil de concentration en circulation. Sur la partie droite des figures, un historique d'une variable spécifique est représenté ; l'historique est relevé à un noeud d'observation 24 positionné en sortie de colonne 12. Les figures 12 à 16 montrent un cycle de fonctionnement du dispositif, comprenant une période (correspondant à une séquence de recyclage, d'injection et de collecte). Sur les figures 12 à 16, l'abscisse de l'historique correspond au temps brut d'un cycle.

Egalement à titre d'exemple, le mélange considéré est binaire mais peut aussi comporter plus de deux produits. Il est aussi précisé que le profil de concentration est représenté uniquement afin de mieux comprendre l'évolution des variables spécifiques contrôlées au noeud d'observation ; il n'est pas question de reconstituer le profil de concentration.

La figure 12 est le début de cycle à T=0. Sur la partie gauche on voit un profil de concentration s'étirant le long de la colonne 12. La courbe en trait plein représente l'état de la concentration en produit le moins retenu. Au noeud 24, aucune concentration n'est relevée ; de fait, le profil de concentration n'a pas atteint la sortie de la colonne 12.

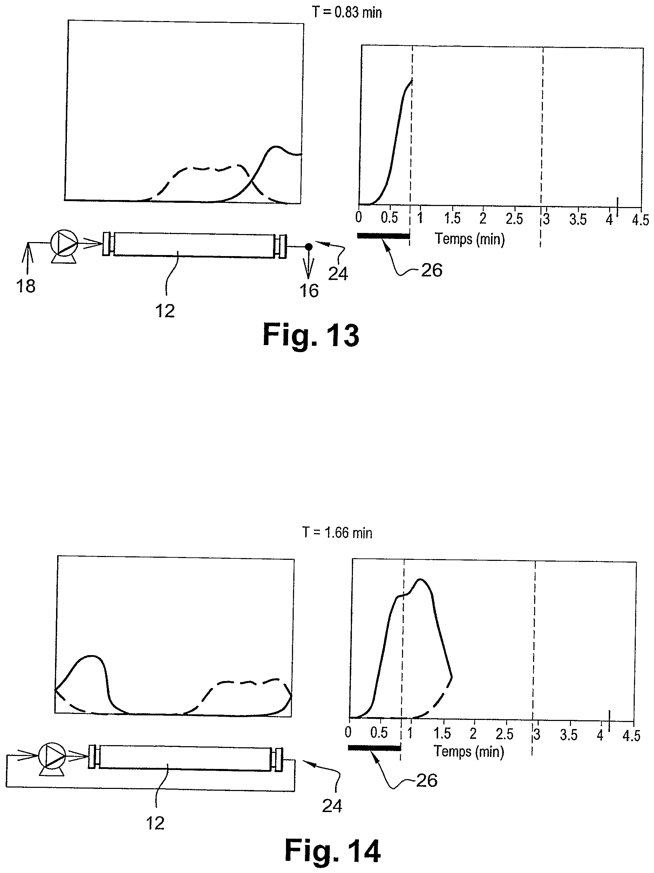

La figure 13 montre une étape de collecte totale de produit le moins retenu. Sur la partie de gauche, le profil de concentration a avancé le long de la colonne 12. Au noeud 24, le profil de concentration est tel que la concentration en raffinat a augmenté ; l'historique montre que la concentration en produit le moins retenu au noeud 24 a augmenté. Par ailleurs, le point de collecte 16 de produit le moins retenu a apparu en sortie de colonne 12 ; au noeud 24 cette collecte de produit le moins retenu est détectée, l'historique comportant une indication de cette collecte par le trait référencé 26.

La figure 14 montre une étape où la sortie de la colonne 12 est reliée à l'entrée de la colonne 12. Les points d'injection et de collecte sont décalés en ce sens que les points ne sont pas connectés. On voit que le profil de concentration en sortie de colonne 12 est prolongé en entrée de colonne 12, témoignant du recyclage de fractions peu séparées. Au noeud 24, le profil de concentration est tel que la concentration en produit le moins retenu a d'abord augmenté puis a diminué ; l'historique montre que la concentration en produit le moins retenu au noeud 24 a augmenté et a diminué. Egalement, on voit sur la partie gauche de la figure 14 qu'au noeud 24, le profil de concentration est tel que la concentration en produit le plus retenu a augmenté ; l'historique montre que la concentration en produit le plus retenu au noeud 24 a augmenté. L'évolution des concentrations sur l'historique montre aussi que les concentrations au noeud 24 passent par un point 28 où les concentrations sont égales.

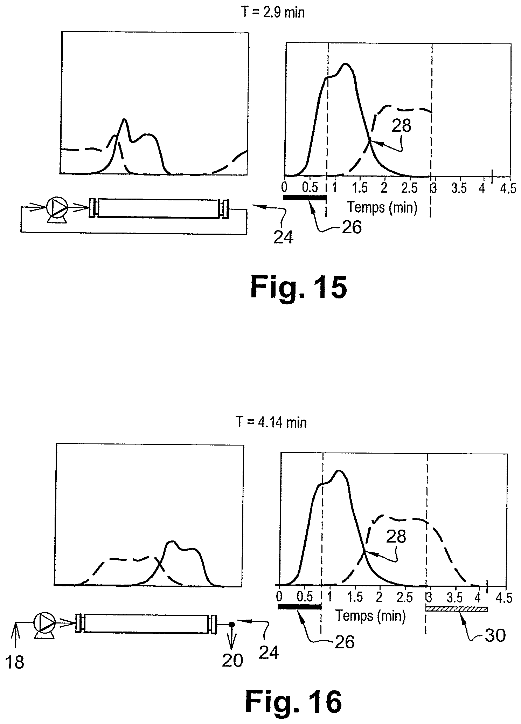

La figure 15 montre une étape où la sortie de la colonne 12 est reliée à l'entrée de la colonne 12. A cette étape (t=2,9 minutes), une injection de mélange a déjà eu lieu en un point 14, non représenté, entre la sortie et l'entrée de la colonne 12 (voir figure 2). L'injection a eu lieu entre les figures 14 et 15. On voit que le profil de concentration en sortie de colonne 12 est prolongé en entrée de colonne 12, témoignant du recyclage de fractions peu séparées. Au noeud 24, le profil de concentration est tel que la concentration en produit le moins retenu diminue au point d'être nulle ; l'historique montre que la concentration en produit le moins retenu au noeud 24 a diminué au point d'être nulle. Egalement, on voit sur la partie gauche de la figure 15 qu'au noeud 24, le profil de concentration est tel que la concentration en produit le plus retenu a augmenté puis se stabilise ; l'historique montre que la concentration en produit le plus retenu au noeud 24 a augmenté puis se stabilise.

La figure 16 montre une étape de collecte d'extrait. Sur la partie de gauche, le profil de concentration a avancé le long de la colonne 12. On voit aussi que les points d'injection et de collecte ont été décalés ; le point de collecte 20 de produit le plus retenu apparaît en sortie de colonne 12 et le point d'injection 18 d'éluant apparaît en entrée de colonne 12. Le profil représenté correspond à un temps de 4,14 minutes vers la fin du cycle. Au noeud 24, le profil de concentration est tel que la concentration en produit le moins retenu est nulle ; l'historique montre que la concentration en produit le moins retenu au noeud 24 est nulle. Au noeud 24, le profil montre que la concentration en produit le plus retenu a diminue au point de devenir nulle ; l'historique montre que la concentration en produit le plus retenu a diminué, mais qu'une collecte de produit le plus retenu a été faite. Par ailleurs, le point de collecte 20 de produit le plus retenu a apparu en sortie de colonne 12 ; au noeud 24 cette collecte produit le plus retenu est détectée, l'historique comportant une indication de cette collecte par le trait référencé 30. Dans les minutes qui suivent t = 2,9 minutes (figure 15), la concentration en produit le plus retenu au noeud 24 continue à diminué au point de devenir nulle vers 4,14 minutes (figure 16). A cet instant la collecte produit le plus retenu sera interrompue, comme l'atteste la fin du trait 30.

En regardant l'historique de la figure 16 au noeud d'observation 24 en sortie de colonne 12, on voit apparaître dans l'ordre :
- une étape de collecte d'une fraction enrichie en un produit peu retenu, par exemple le raffinat ;
- une étape dite d'accumulation, où sortie et entrée des colonnes encadrant le noeud d'observation sont interconnectées, sans collecte, mais avec une injection de mélange de façon discontinue ;
- une étape de collecte d'une fraction enrichie en un produit peu retenu, par exemple l'extrait.

Sur l'historique de la figure 16, on se rend compte que le point 28 (qui sera plus explicité par la suite) est situé entre les traits 26 et 30 de collecte de raffinat et d'extrait ; ceci montre que ce point apparaît au noeud d'observation 24 alors que le noeud d'observation 24 se trouve dans la zone de séparation du dispositif, entre les points de collecte de raffinat et d'extrait. Le temps est décrit ici uniquement à titre indicatif, ce pour les figures 12 à 16, un procédé CycloJet pouvant naturellement fonctionner avec des durées différentes.

Ce qui est décrit précédemment à l'aide des figures 6 à 16 montre l'obtention d'un historique des concentrations traduisant l'évolution des concentrations au noeud d'observation ; toutefois, ces historiques ne sont donnés que pour faciliter la compréhension de l'invention. En effet, les valeurs de concentration ne pouvant pas être obtenues facilement et directement, on ne peut pas obtenir facilement un historique de concentrations. Il est donc préférable de travailler avec des variables spécifiques pouvant être obtenues plus rapidement et directement. Ainsi, à titre d'exemple de variable spécifique, on peut citer :
- le pouvoir rotatoire des fractions du mélange à séparer, obtenu par exemple par le signal renvoyé par un détecteur polarimétrique, utilisable dans le cas où les produits du mélange à séparer sont optiquement actifs, par exemple des énantiomères.
- L'absorbance ou l'émission d'un rayonnement spectroscopique, obtenue par exemple par le signal renvoyé par un détecteur spectroscopique par exemple à rayonnements UV ou infra rouge, utilisable lorsque les produits du mélange à séparer sont des molécules naturelles ou de synthèse possédant des groupements chimique détectables notamment des biomolécules, protéines ou peptides.
- L'indice de réfraction, la densité, la conductivité ou le pH, obtenue par exemple par le signal renvoyé par des détecteurs mesurant de telles grandeurs physiques, utilisable par exemple dans le cas où le mélange à séparer contient par exemple des sucres, des produits ioniques, des acides ou des bases.
- la combinaison de plusieurs variables spécifiques citées ci-dessus.

Ainsi, les variables spécifiques données ci-dessus à titre d'exemple sont des variables pour lesquelles on peut obtenir facilement un historique. L'historique est obtenu avec un signal représentatif de ces variables spécifiques et est obtenu directement sur le dispositif. Les signaux obtenus avec les appareils mentionnés permettent d'obtenir directement un historique d'une variable spécifique. Les historiques de ces variables spécifiques sont obtenus en temps réel ce qui rend le procédé efficace. Les historiques traduisent l'évolution des concentrations au noeud d'observation, et ce, sous la forme d'un signal qui peut facilement être obtenu.

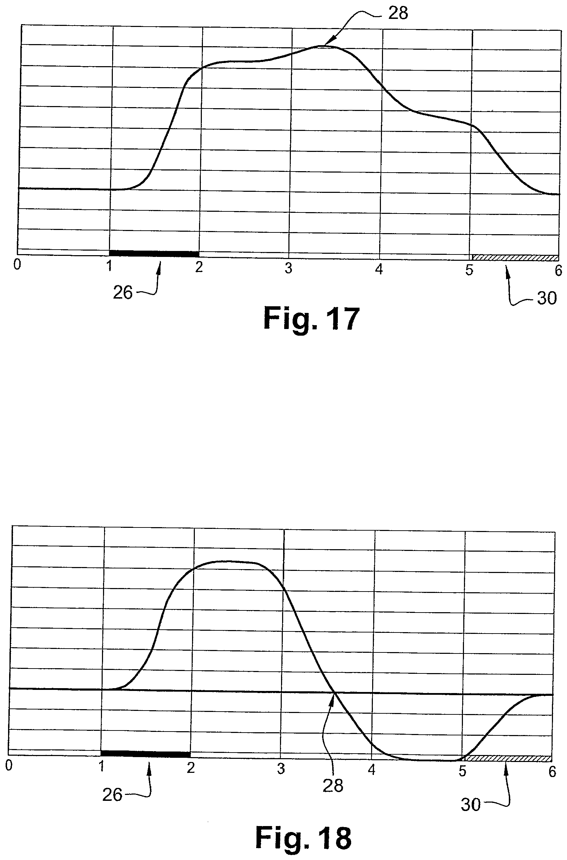

Les figures 17 à 20 montrent des exemples d'historique d'une variable spécifique pour un SMB et un Cyclojet sous la forme d'un signal traduisant l'évolution des concentrations au noeud d'observation.

Pour un SMB, la figure 17 traduit l'historique des concentrations de la partie droite de la figure 11 sous forme d'un historique d'absorbance obtenu par un détecteur UV. La figure 18 traduit l'historique des concentrations de la partie droite de la figure 11 sous forme d'un historique du pouvoir rotatoire d'un mélange à d'énantiomères à séparer.

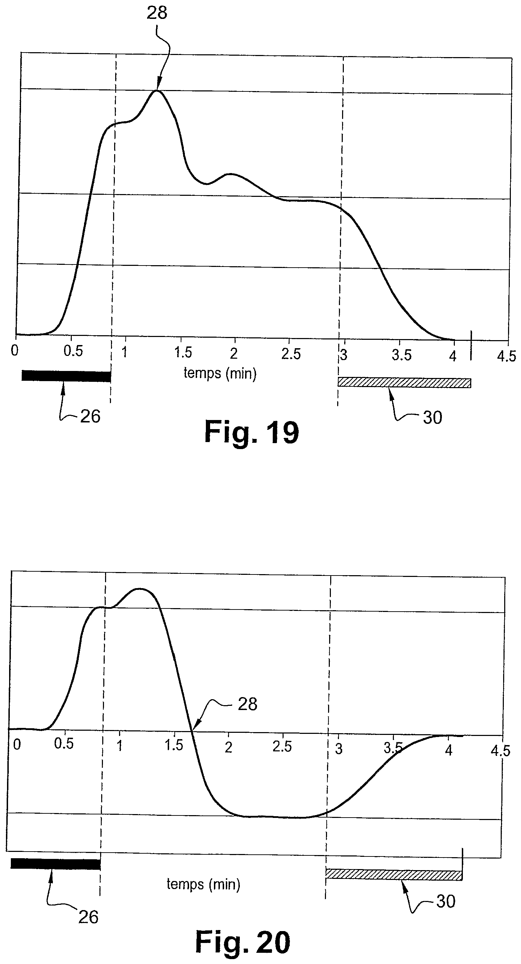

Pour un CycloJet, la figure 19 traduit l'historique des concentrations de la partie droite de la figure 16 sous forme d'un historique d'absorbance obtenu par un détecteur UV. La figure 20 traduit l'historique des concentrations de la partie droite de la figure 16 sous forme d'un historique du pouvoir rotatoire d'un mélange d'énantiomères à séparer.

Les détecteurs ci-dessus peuvent être situés sur le dispositif, sur les lignes même du dispositif (sur la ligne de recyclage) ; pour cela on peut envisager que le fluide circule au travers des détecteurs. Ceci est avantageux pour des faibles débits de fluide dans le dispositif. Pour des débits plus importants, on préféra déporter les détecteurs des lignes ; pour cela on effectue des dérivations de faibles quantités de fluides, sur lesquelles on situe les détecteurs.

Le contrôle de l'historique d'une variable spécifique au noeud d'observation permet donc de connaître l'état de cette variable en un point du dispositif sur un cycle.

Le procédé de séparation comprend ensuite une étape de détection d'un point caractéristique de l'historique. Cette étape permet de déduire du contrôle de la variable spécifique, l'existence d'un point révélateur du procédé de séparation. De préférence, le point caractéristique n'est pas une valeur précise mais est révélateur d'un phénomène en circulation au noeud d'observation. Le point caractéristique est révélateur d'un comportement relatif des fractions circulant au noeud d'observation. Le point caractéristique est situé entre deux collectes successives, dans la zone de séparation.

Par exemple, le point caractéristique peut être le point où les concentrations en chacun des produits sont égales ; plus spécifiquement, sur les figures 9 et 14, on voit un point 28 où les concentrations en raffinat et en extrait sont égales. Dans le cas d'une séparation d'isomères optiques, le point d'iso-concentration correspond à un signal nul du polarimètre. Sur les figures 18 et 20, le point d'iso-concentration 28 correspond au point où la variable spécifique est nulle, c'est-à-dire lorsque l'historique est nul. Ceci est d'autant plus simple, que la détection du signal nul un d'un maximum de signal n'est pas soumis à des contraintes d'étalonnage précises de l'appareil. Dans un autre mode de réalisation de l'invention, un autre type de point caractéristique peut être un point d'inflexion, une hauteur ou une pente correspondant à une valeur seuil.

A titre d'autre exemple, dans le cas de mélanges de molécules possédants des réponses à un ou plusieurs détecteurs, un point caractéristique peut correspondre à une combinaison des signaux renvoyés par ce ou ces détecteurs. Par exemple, dans le cas de deux produits absorbant différemment à deux longueurs d'ondes UV, l'égalité de deux fonctions dépendantes des absorbances peut être le point caractéristique. Le point caractéristique peut être aussi le point où l'historique passe par un extremum ; le point caractéristique peut être le maximum d'un signal obtenu par un détecteur UV mesurant l'absorbance des produits du mélange à une longueur d'onde, la variable spécifique étant l'absorbance des produits du mélange à une longueur d'onde. Sur les figures 17 et 19, le point caractéristique est par exemple le maximum de l'historique et donc le maximum du signal (sur la figure 19, ceci correspond environ à t = 1.25).

De façon générale, un point caractéristique est caractérisé en ce que si ce point passe au noeud d'observation alors qu'une collecte y est effectuée, la pureté de cette même collecte est dégradée. La position de ce point caractéristique est alors une donnée permettant d'anticiper la valeur des puretés et rendements du dispositif.

Comme indiqué ci-dessus, un avantage du procédé selon l'invention est que l'historique peut être contrôlé sur une durée inférieure à un cycle. En effet, au cours de l'étape de contrôle, il suffit de détecter le point caractéristique pour passer ensuite à l'étape suivante du procédé. Par exemple, sur les figures 6 à 16, on voit que le point 28 apparaît avant la fin d'un cycle ; ceci se traduit sur les figures 17 à 20 par la possibilité d'arrêter le contrôle de l'historique dès que le point caractéristique 28 apparaît. De préférence, l'étape de contrôle est effectuée sur un cycle. Par ailleurs, les étapes de contrôle et de détection du point caractéristique peuvent être mises en oeuvre à une fréquence correspondant à un nombre entier de cycles (tous les n cycles, n étant supérieur ou égal à 1). Plus les étapes de contrôle et de détection sont fréquemment mises en oeuvre, plus le réglage du fonctionnement du dispositif est précis.

Le procédé selon l'invention comprend également une étape de comparaison de la position du point caractéristique avec une position cible. La détection du point caractéristique peut être assimilée à la détection du temps au bout duquel le point caractéristique apparaît au noeud d'observation pendant la durée du contrôle, par exemple un cycle ; le point cible correspond alors au temps au bout duquel le point caractéristique devrait apparaître au noeud d'observation. Sur un historique correspondant à l'évolution dans le temps d'une variable spécifique, l'étape de comparaison consiste à comparer l'abscisse du point caractéristique avec une abscisse cible. Ceci permet de déterminer si une perturbation est intervenue dans le dispositif. Dans un dispositif convenablement réglé, de préférence sans perturbation et en régime établi, la position du point caractéristique est concomitante avec la position cible. Si le dispositif n'est pas perturbé, le point caractéristique apparaît au noeud d'observation 24 sensiblement au même moment à chaque cycle. La comparaison de la position du point caractéristique avec la position cible peut alors correspondre à une différence de temps de passage au point d'observation 24.

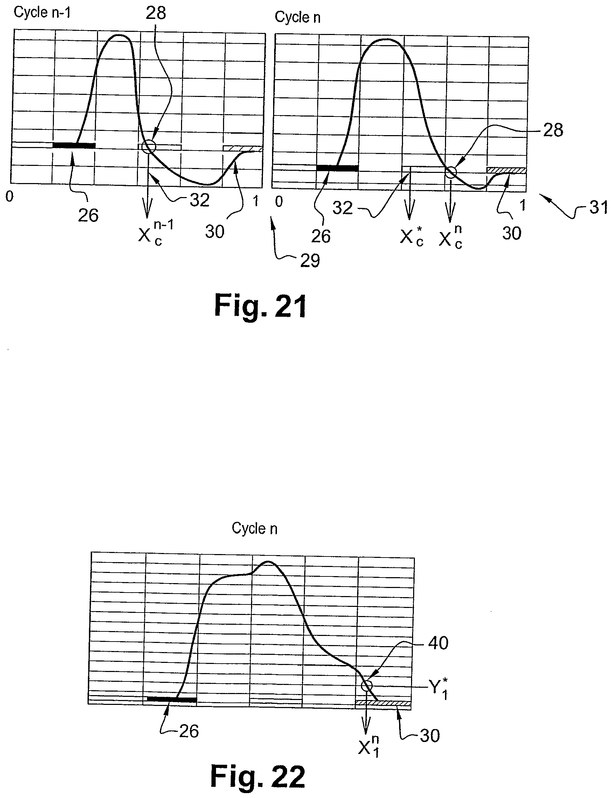

La figure 21 montre un exemple de comparaison de la position du point caractéristique avec la position cible. La figure 21 montre des historiques contrôlés lors de l'étape de contrôle en un noeud 24 d'un dispositif à injection continu type SMB ou à injection discontinue du type CycloJet, et ce à divers cycles. La variable spécifique choisie est par exemple le pouvoir rotatoire mesuré par un détecteur polarimétrique dans le cas où le produit le moins retenu induit une rotation positive et le produit le moins retenu une rotation négative. De plus, sont aussi représentés les traits 26 et 30 correspondant respectivement aux collectes de raffinat et d'extrait.

Sur le premier cycle (n-1) de la figure 21, le dispositif n'est pas perturbé et la comparaison du point 28 avec la position cible 32 (dont l'abscisse est respectivement x_{c}ⁿ⁻¹ et x_{c}*) montre qu'il y a superposition des positions de la position cible et du point caractéristique ; la position du point caractéristique coïncide avec la position cible.

Dans le cas où une perturbation intervient après la détection du point 28, au cycle suivant (n), le point 28 se trouve décalé par exemple vers la droite par rapport à la position cible x_{c}*, c'est-à-dire : l'historique coupe l'abscisse plus à droite que l'abscisse x_{c}*, cela signifie que le point caractéristique 28 a circulé « devant » le noeud d'observation en retard par rapport à la position cible 32. Ainsi, l'abscisse du point 28 du deuxième historique s'est rapprochée de la collecte 30 d'extrait. Cela signifie que le point 28 est parvenu au noeud d'observation plus tard par rapport à la position cible et s'est rapprochée de la collecte d'extrait ; la pureté de cette collecte d'extrait risque alors de diminuer. Il convient donc de réagir par un réglage 31 à ce décalage dû à la perturbation 29, pour faire coïncider la position du point caractéristique coïncide avec la position cible.

Le procédé comprend ensuite une étape de réglage de la quantité de la phase mobile modifiant la position du point caractéristique s'il apparaît une différence entre la position du point caractéristique et la position cible. En d'autres termes, une différence entre la position du point caractéristique et la position cible signifie une perturbation de fonctionnement du dispositif que l'on peut aisément modifier en réglant uniquement la quantité de phase mobile. Cette étape est la réaction à un décalage observé sur la figure 21.

La phase mobile, correspondant au fluide en circulation dans le dispositif, permet le déplacement dans le dispositif des fractions. Sur les figures 6 à 20, le point caractéristique 28 se déplace dans le dispositif grâce à la phase mobile. La phase mobile porte le point caractéristique le long du dispositif. Sur un dispositif type SMB ou VariCol, le point caractéristique tourne autour du dispositif par déplacement par la phase mobile ; sur un dispositif type CycloJet, le point caractéristique se déplace le long de la ou des colonnes. Ainsi, ce qui permet de déplacer le point caractéristique sur la totalité du dispositif (par exemple sur un cycle) est donc le déplacement de la phase mobile. La phase mobile est mise en mouvement dans le dispositif. La quantité de phase mobile est définie par le produit d'un débit par le temps de cycle de fonctionnement. On peut alors modifier la quantité de phase mobile en modifiant le débit et/ou le temps de cycle.

Selon les figures 6 à 20, on se rend compte que le point caractéristique est situé entre deux collectes de fractions ; au cours de l'étape de réglage on cherche donc à modifier la quantité de phase mobile pour faire varier la position du point caractéristique entre ces deux collectes.

Par exemple, dans un dispositif à injection continue, la quantité de phase mobile peut se régler par modification du débit pendant un certain temps ; la modification du débit pendant un certain temps, par exemple un cycle, permet de régler la quantité de phase mobile. En particulier, on peut modifier la quantité de phase mobile de façon ciblée dans le dispositif. Les dispositifs permettant de mettre en oeuvre les procédés SMB ou VariCol comprennent une pluralité de zones telles que décrites précédemment. Il y a notamment une zone de séparation entre deux points de collecte de fraction. Cette zone comprend plus précisément deux zones, une zone 2 et une zone 3, telles que définies ci-dessus. La zone 2 peut comprendre en entrée un point de collecte d'une fraction, par exemple la plus retenue ou extrait, et en sortie, un point d'injection de mélange ; la zone 3 peut comprendre en entrée, le point d'injection de mélange et en sortie, un point de collecte d'une fraction, par exemple la moins retenue ou raffinat. La quantité de phase mobile peut être réglée sur la zone 2. On peut régler la quantité de phase mobile en zone 2 de plusieurs manières, par exemple en modifiant le débit de collecte de fraction au point de collecte en entrée de zone 2. On peut aussi modifier le débit de la phase mobile en zone 1 sans modifier la quantité de fraction soutirée au point de collecte en entrée de zone 2 ce qui modifie le débit en zone 2.

De préférence, on règle la quantité de phase mobile hors volume de mélange injecté (sans tenir compte du volume de mélange injecté) ; de préférence, au cours de la présente routine de positionnement du point caractéristique, ne modifie pas la quantité de mélange injecté. Ainsi, on peut parvenir à modifier la quantité de phase mobile en zone 3 par action sur la quantité de phase mobile en zone 2. En effet, si la quantité de mélange injecté est constante ou varie faiblement, la variation de quantité de phase mobile en zone 3 est alors dépendante de la variation de la quantité de phase mobile en zone 2 ; on peut alors régler de manière dépendante la quantité de phase mobile en zones 2 et 3, mais uniquement en réglant le débit en zone 2.

Par exemple, dans un dispositif à injection discontinue, s'il apparaît une différence de position entre le point caractéristique et la position cible, alors une action de régulation du dispositif peut être réalisée. Par exemple, la quantité de phase mobile peut être modifiée. La quantité de phase mobile peut se régler par modification du temps de cycle à un débit donné. Dans un CycloJet, opéré avec un même débit, la quantité de phase mobile est modifiée par variation du temps d'application du débit. Sur un cycle de fonctionnement modifié, la quantité de phase mobile dans un CycloJet, correspondant au produit du débit par le temps de cycle, est modifiée.

De préférence, on règle la quantité de phase mobile hors volume de mélange injecté ; de préférence, au cours de la présente routine de positionnement du point caractéristique, on ne considère pas la valeur du volume de mélange injecté pendant un cycle.

Dans le cas d'un dispositif à injection continu, un SMB par exemple, le procédé décrit en sa première routine est avantageux notamment par rapport à l'article « Optimal operation of simulated moving bed chromatographic processes by means of simple feedback control » par H. Schamm, S. Grüner, A. Kienle, Journal ofchromatography A, 1006 (2003), 3-13, cité ci-dessus; dans cet article, il est effectué une régulation individuelle des débits de chacune des zones. Cet article trouve une limitation dans le cas des systèmes où le débit de mélange à séparer est faible devant le débit en zone 2. Ainsi, une faible variation du débit en zone 2 ou en zone 3 induit alors une forte variation du débit de mélange à traiter perturbant fortement le système et sa régulation.

Dans le cas de la présente invention, le positionnement du point caractéristique se fait par exemple uniquement en jouant sur le débit en zone 2 sans tenir compte du débit de mélange à séparer qui peut être modifié par une autre routine indépendante décrite ci-après. De fait, la routine de positionnement du point caractéristique n'est pas influencée par la valeur du volume de charge injectée sur un cycle.

Dans le cas décrit par la figure 21 afin de positionner (ou faire coïncider) le point caractéristique sur la consigne (x_{c}*) au cycle suivant, il est possible d'apporter une modification sur la quantité de phase mobile modifiant la position du point caractéristique ; le point caractéristique étant apparu après sa position cible, pour corriger cet écart, le volume de phase mobile modifiant sa position peut donc être augmenté. Par exemple en jouant sur le débit en zone 2, ou sur la période du système dans le cas d'un procédé SMB ou VariCol. D'une façon plus générale, la modification d'un volume ou d'une quantité de phase mobile qui est le produit d'un débit moyen par un temps de cycle peut se faire par modification du débit ou par la modification du temps de cycle.

Si la régulation porte sur le débit, celui-ci sera par exemple augmenté si la position du point caractéristique est située après le point cible ou réduit dans le cas contraire. Si la régulation porte sur le temps de cycle, celui-ci sera par exemple augmenté si la position du point caractéristique est située après le point cible ou réduit dans le cas contraire.

Ainsi, le réglage de la quantité de phase mobile permet de faire varier le passage des fractions au noeud d'observation 24. Le point caractéristique 28 peut être en avance par rapport au point cible 32. En réduisant la quantité de phase mobile, on peut freiner la circulation des fractions, et retarder le point caractéristique 28 de sorte à le positionner au point cible 32. Inversement, si le point caractéristique 28 est en retard par rapport au point cible 32, on augmente la quantité de phase mobile pour accélérer la circulation des fractions, et accélérer le point caractéristique de sorte à le positionner au point cible. Si le point caractéristique est stabilisé au point cible, ceci signifie qu'il n'y a alors pas de modification de réglage à effectuer. On aussi envisager de mettre un seuil de différence entre le point caractéristique et le point cible ; le réglage est effectué si la différence dépasse le seuil.

Il est bien entendu également considéré que le réglage peut être mis en oeuvre sans attendre que le point caractéristique apparaisse et que la différence de position avec la position cible soit constatée ; le réglage peut aussi avoir lieu de sorte que le point caractéristique apparaisse directement à la position cible. Ceci permet d'affiner encore plus la régulation de fonctionnement par le procédé. Egalement, ceci permet de réagir rapidement à une perturbation.

Une telle régulation est simple à mettre en oeuvre ; on peut par exemple utiliser une régulation PID agissant sur la quantité de phase mobile. On peut également utiliser d'autres méthodes.

Les étapes décrites précédemment de contrôle, de détection, de comparaison, et de réglage sont les étapes de la première routine ou routine de positionnement du point caractéristique.

L'avantage de ce procédé décrit en sa routine de positionnement du point caractéristique, est qu'il permet de réagir rapidement aux perturbations du dispositif, contrairement aux procédés décrit dans l'art antérieur. D'une manière générale, les procédés basés sur l'analyse de composition de fractions collectées ne permettent pas de réagir rapidement à des perturbations dont les effets mettent plusieurs cycles à se stabiliser. Dans certains cas le délai d'analyse et d'obtention des valeurs de puretés est long (jusqu'à une dizaine de cycles). Le délai d'analyse des compositions est d'autant plus long qu'il est préférable d'échantillonner sur un cycle entier les fractions du dispositif chromatographique, ces échantillons étant ensuite analysés ; ainsi on peut n'obtenir les résultats de pureté que plusieurs cycles plus tard, ce qui rend plus difficile la régulation et la détermination du réglage à appliquer. Il y a donc un délai de réactivité des systèmes à accumulation suite à des modifications de paramètres opératoires ou suite à des perturbations à quoi peut s'ajouter un délai d'analyse.

Contrairement aux procédés décrits dans l'art antérieur, le présent procédé permet de réagir immédiatement aux perturbations, et au sein même du cycle de fonctionnement au cours duquel une perturbation se produit. Non seulement la détection des perturbations est rapide mais encore, la régulation mise en oeuvre pour rétablir le dispositif est également rapide.

Le procédé peut en outre comprendre une deuxième routine ou routine de définition de la position cible. Cette routine de définition de la position cible est effectuée de préférence au moins en partie en parallèle de la routine de positionnement du point caractéristique. La deuxième routine rend la position cible variable. La routine de définition de la position cible permet d'améliorer le procédé déjà décrit, de sorte à optimiser la position cible par rapport aux puretés souhaitées. La position cible 32 peut être tel qu'elle est « suffisamment » éloignée (dans le temps) des collectes de raffinat et d'extrait tel que cela est le cas sur le premier historique de la figure 17, si la pureté des deux fractions (en cas de mélange binaire) est d'importance. Toutefois, il se peut que la pureté d'une seule fraction soit d'importance ; alors la position cible peut être rapprochée de l'une ou l'autre des collectes de raffinat ou d'extrait. On peut également, selon un mode de réalisation de l'invention, mesurer une quantité du produit cible et son rendement lié à la présence de produit cible perdu dans les autres collectes. Ce rendement est directement lié à la pureté des autres fractions. Ainsi il est possible d'utiliser indifféremment dans la présente invention des contraintes de puretés et/ou de rendements, il s'agit d'un même type de contraintes, mais posé différemment.

Afin de définir la position cible, le procédé peut comprendre une étape de collecte d'au moins une fraction. Cette étape est réalisée à l'un des points de collecte 16 ou 20. De préférence, on collecte la fraction comportant le produit d'intérêt. Ensuite, on mesure la pureté de la fraction et on la compare à une pureté prédéterminée de sorte à définir la position de la position cible. Il est aussi envisageable de collecter deux fractions, de mesurer la pureté des deux fractions et de comparer ces puretés à des puretés prédéterminées de sorte à définir la position du point cible.
Il est à noter que la mesure de la pureté des fractions peut être obtenue avec un certain délai. Toutefois, ceci n'est pas pénalisant pour le procédé car la routine de définition de la position cible est réalisée au moins en partie en parallèle de la routine de positionnement du point caractéristique ; la définition de la nouvelle position cible peut alors être mise en oeuvre à chaque nouvelle mesure disponible ou même tous les cycles en considérants simplement les dernières mesures disponibles.

Pendant le délai d'analyse de la pureté, le procédé poursuit le réglage du fonctionnement du dispositif selon la première routine par comparaison du point caractéristique avec la position cible en cours de validité.

Afin de calculer la position du point cible, plusieurs méthodes sont possibles. On peut, au préalable, définir les grandeurs suivantes :
- P*ₑₓₜ : Pureté cible à l'extrait
- P*_{raff} : Pureté cible au raffinat
- Pₑₓₜ : Pureté à l'extrait
- P_{raff} : Pureté au raffinat
- εₑₓₜ = (Pₑₓₜ - P*ₑₓₜ)
- ε_{raff} = (P_{raff} - P*_{raff})

Selon une première méthode, on applique un régulateur type PID sur εₑₓₜ ou ε_{raff} Ainsi si εₑₓₜ est négatif, alors la position cible sera éloignée de la ligne d'extrait (la position cible se rapproche de la ligne de raffinat). De même, si εₑₓₜ est positif, alors la position cible sera rapprochée de la ligne d'extrait (la position cible s'éloigne de la ligne de raffinat). La régulation sera la même pour un régulateur PID appliqué à ε_{raff}. Si ε_{raff} est négatif, alors la position cible sera éloignée de la ligne de raffinat (la position cible se rapproche de la ligne d'extrait). De même, si ε_{raff} est positif, alors la position cible sera rapprochée de la ligne de raffinat (la position cible s'éloigne de la ligne d'extrait).

Selon une deuxième méthode, un régulateur PID est appliqué sur la combinaison des écarts εₑₓₜ et ε_{raff}.

Selon une troisième méthode, une fonction dépendante des puretés obtenues et des puretés cibles est directement utilisée pour calculer la nouvelle position du point caractéristique.

Au cours de l'étape de définition de la position cible, la position cible peut aussi être définie suite à la modification de la position de l'injection de mélange sur l'historique. Ceci permet de s'adapter à des changements de position du point d'injection.

Le procédé peut en outre comprendre une troisième routine ou routine de modification de la quantité de mélange injecté. Cette routine de modification de la quantité de mélange injecté est également effectuée de préférence au moins en partie en parallèle des routines précédemment décrites de positionnement du point caractéristique et de définition de position cible. La routine de modification de la quantité de mélange permet encore d'améliorer le procédé déjà décrit, de sorte à optimiser la production en respectant les contraintes de pureté des fractions.

La troisième routine peut comprendre une étape de collecte d'au moins une fraction. Cette étape est réalisée à l'un des points de collecte 16 ou 20. De préférence, on collecte la fraction comportant le produit d'intérêt. Ensuite, on mesure la pureté de la fraction et on la compare à une pureté prédéterminée de sorte à définir la position de la position cible. Il est aussi envisageable de collecter deux fractions, de mesurer la pureté des deux fractions et de comparer ces puretés à des puretés prédéterminées de sorte à définir la position du point cible.

Le procédé comprend ensuite une étape de modification de la quantité de mélange mise en oeuvre en fonction de la différence des puretés mesurées par rapport aux puretés prédéterminées. Dans le cas d'un mélange binaire par exemple, si les deux puretés d'extrait et de raffinat sont toutes les deux supérieures aux puretés prédéterminées, cela signifie que les puretés sont au-delà des spécifications ; la quantité de mélange peut être augmentée pour « dégrader » les puretés jusqu'aux spécifications. Si les puretés d'extrait et de raffinat sont toutes les deux inférieures aux puretés prédéterminées, cela signifie que les puretés sont en-deçà des spécifications ; la quantité de mélange peut être diminuée pour améliorer la séparation et augmenter les puretés jusqu'aux spécifications. On peut aussi mettre ceci en oeuvre lorsqu'une seule pureté présente un intérêt. On peut aussi mesurer une quantité du produit cible et son rendement lié à la présence de produit cible perdu dans les autres collectes. Ce rendement est directement lié à la pureté des autres fractions.

La modification de la quantité de mélange peut être mise en oeuvre :
- en augmentant le débit d'injection de mélange dans les dispositifs à injection continue
- en augmentant le volume injecté dans les dispositifs à injection discontinue.
- en réduisant le temps de cycle dans les dispositifs à injection discontinue de façon à augmenter la fréquence des injections.

La modification de la quantité de mélange provoque une perturbation pouvant entraîner le déplacement du point caractéristique par rapport à la position cible. Le procédé permet alors la mise en oeuvre de la routine de positionnement du point caractéristique pour stabiliser le fonctionnement du dispositif et permet la mise en oeuvre de la routine de définition de position cible. Les routines de définition de position cible (deuxième routine) et de modification de la quantité de mélange (troisième routine) peuvent être mises en oeuvre indépendamment l'une de l'autre au moins en partie en parallèle de la routine de positionnement du point caractéristique (première routine). Lorsque les deuxièmes et troisième routines sont mises en oeuvre, la collecte de(s) fraction(s), la (les) mesure(s) des puretés et la comparaison à des puretés prédéterminées peuvent être effectuées pour les deux routines.

Pour définir la quantité de mélange (ou charge) à injecter, on peut procéder de la manière suivante. Soient les variables suivantes :
- P*ₑₓₜ : Pureté cible à l'extrait
- P*_{raff} : Pureté cible au raffinat
- Pₑₓₜ : Pureté à l'extrait
- P_{raff} : Pureté au raffinat

Selon une première méthode, des régulations PID peuvent être effectuées sur une grandeur obtenue à partir des écarts d'une seule ou des puretés à leur valeur cible. Une autre possibilité est également d'utiliser seulement la valeur d'une fonction dépendante des puretés obtenues et des puretés cibles pour calculer la nouvelle quantité à injecter.

Les trois routines précédentes permettent de réguler les puretés des lignes d'extrait et de raffinat en jouant sur les propriétés de séparation des fractions du mélange à traiter : typiquement, sur un historique, on régule en fonction de ce qui se produit entre les étapes de collecte du raffinat, d'injection de la charge et de collecte de l'extrait. Par exemple sur un procédé SMB ou VariCol, on régule en fonction de ce qui s'observe sur l'historique lorsque le noeud d'observation localisé dans où à la frontière des zones 2 et 3. Par exemple sur un CycloJet, on régule en fonction de ce qui s'observe sur l'historique pendant l'étape de recyclage d'un CycloJet.

Les procédés chromatographiques comprennent également au moins une zone ou une séquence dédiée à la désorption du produit le plus retenu, typiquement ce qui est effectué par la zone 1 des procédés SMB et VariCol et ce qui est effectué par la dernière étape d'une séquence CycloJet. Les procédés chromatographiques comprennent également au moins une zone ou une séquence dédiée à l'adsorption ou à la collecte du produit le moins retenu, typiquement ce qui est effectué par la zone 4 des procédés SMB et VariCol et ce qui est effectué par la première étape d'une séquence CycloJet. Ainsi, le procédé peut aussi comprendre une quatrième routine consistant en la régulation des zones ou séquences d'adsorption et de désorption. Cette régulation permet d'empêcher des pollutions d'une désorption incomplète du produit le plus retenu et d'une adsorption ou d'une collecte insuffisante du produit le moins retenu. Cette routine peut travailler avec l'historique contrôlé en première routine ou utiliser l'historique d'un autre détecteur et il est parfois préférable de définir une autre origine pour l'abscisse de ce nouvel historique. Dans les exemples qui suivent, il s'agit d'un détecteur UV (Ultra Violet) pour cette quatrième routine alors que les trois premières routines utilisent soit un UV (exemple SMB) ou un polarimètre (Exemple VariCol).

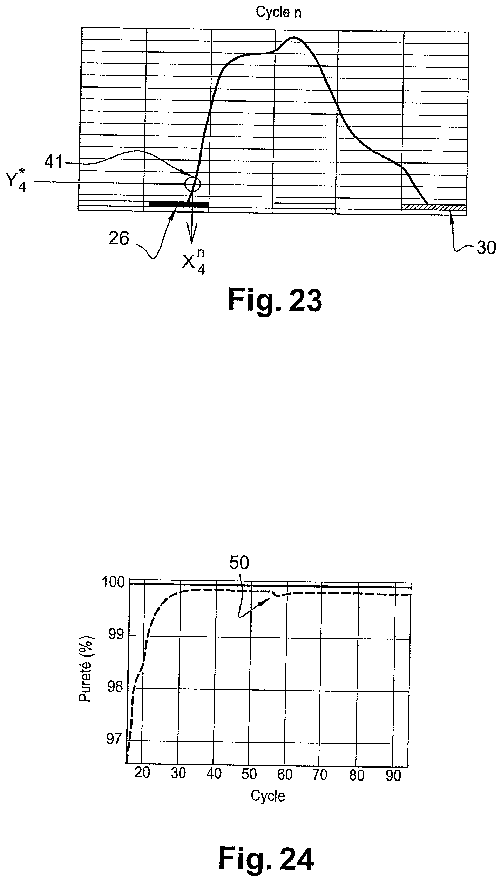

Si il est choisi de contrôler un nouvel historique, on peut choisir alors un nouveau noeud d'observation. On contrôle l'historique d'une variable spécifique ; les exemples de variable donnés en liaison avec la première routine sont applicables ici. L'historique est visible sur les figures 22 et 23. Sur ces figures, est représenté un historique d'absorbance ou d'émission d'un rayonnement spectroscopique obtenu par un détecteur UV. Le trait 30 correspond à la collecte de fraction contenant le produit le moins retenu (raffinat), la collecte de raffinat étant détectée au noeud d'observation avant l'étape d'injection et avant la collecte d'extrait (fraction contenant le produit le plus retenu) correspondant au trait 26.

Ensuite, on peut détecter un deuxième point caractéristique 40 de l'historique (figure 22), dédié à l'adsorption ou à la collecte d'une fraction du mélange moins retenue, situé entre l'étape de soutirage ou de collecte de fraction moins retenue et l'étape d'injection d'éluant ; dans le cas d'un SMB ou d'un VariCol, il s'agit d'un point caractéristique situé en zone 1. Dans le cas d'un CycloJet, il s'agit de la première séquence.

On peut aussi détecter un troisième point caractéristique 41 de l'historique (figure 23), dédié à la désorption ou à la collecte d'une fraction du mélange plus retenue, situé entre l'étape d'injection d'éluant et l'étape de collecte ou de soutirage de fraction retenue ; dans le cas d'un SMB ou d'un VariCol, il s'agit d'un point caractéristique situé en zone 4. Dans le cas d'un CycloJet, il s'agit de la dernière séquence.

La quatrième routine comprend aussi, pour chaque deuxième et troisième points caractéristiques, la comparaison de la position du point caractéristique par rapport à une position cible. Enfin, on règle la quantité de la phase mobile modifiant la position du deuxième et troisième points caractéristiques s'il apparaît une différence de position avec la position cible respective.

En SMB et VariCol par exemple, au cours de cette routine, on détecte d'autres points caractéristiques et les débits en zone 1 et 4 seront modifiés afin de positionner les points caractéristiques sur des positions de consigne respectives en zone 1 et 4. Cette routine est indépendante des trois précédentes. La régulation du débit en zone 1 se fait d'après un point caractéristique défini par exemple par une valeur seuil du signal UV. Selon la figure 22, des variables sont définies :
Y₁* : seuil du signal UV,
X₁* : abscisse en zone 1 de consigne,
X₁ⁿ : abscisse en zone 1 ayant pour ordonnée Y₁* au cycle n,
Si au cycle n, X₁ⁿ est supérieur à l'abscisse X₁* le débit en zone 1 sera par exemple augmenté ; il peut être réduit dans le cas contraire.

En CycloJet par exemple, l'abscisse X₁* est localisée préférentiellement dans l'intervalle de temps où la collecte d'extrait est effectuée à proximité du noeud de contrôle. Si au cycle n, X₁ⁿ est supérieur à l'abscisse X₁* la durée de l'étape de collecte de l'extrait sera augmentée, elle pourra être réduite dans le cas contraire.

La régulation du débit en zone 4 se fait d'après un point caractéristique défini par une valeur seuil du signal UV. Selon la figure 23, des variables sont définies :
Y₄* : seuil du signal UV,
X₄* : abscisse en zone 4 de consigne,
X₄ⁿ : abscisse en zone 4 ayant pour ordonnée Y₄* au cycle n,
En SMB et VariCol Si au cycle n, X₄ⁿ est supérieur à l'abscisse X₄* le débit en zone 4 sera par exemple augmenté ; il peut être réduit dans le cas contraire.

En CycloJet par exemple, l'abscisse X₄* est localisée préférentiellement dans l'intervalle de temps où la collecte d'extrait est effectuée à proximité du noeud de contrôle. Si au cycle n, X₄ⁿ est inférieur à l'abscisse X₄* la durée de l'étape de collecte de l'extrait sera augmentée, elle pourra être réduite dans le cas contraire.
Le dispositif comporte une logique de commande adaptée à mettre en oeuvre le procédé ci-dessus. Le dispositif est ainsi réglé automatiquement. En particulier, la logique de commande est adaptée à mettre en oeuvre au moins en partie en parallèle les diverses routines précédemment décrites de positionnement du point caractéristique, de définition du point cible, de modification de la quantité de mélange et de régulation des phénomènes d'adsorption et de désorption des fractions du mélange à traiter.

Des exemples vont être maintenant donnés.

### EXEMPLE 1

Cet exemple illustre les différentes étapes du procédé de séparation sur un dispositif de séparation à injection continue de type VariCol. La séparation choisie est celle des isomères du mélange racémique SB-553261 (Application of the "VARICOL" process to the séparation of the isomers of the SB-553261 racemate, O. Ludemann-Hombourger, G. Pigorini, R.M. Nicoud, D. S. Ross, G. Terfloth, Journal of Chromatography A, 947 (2002) 59-68).

Dans cet exemple, les routines de positionnement du point caractéristique, de définition du point cible, de modification de la quantité de mélange utilisent le signal d'un détecteur polarimétrique comme variable spécifique ; le point caractéristique utilisé est le point situé entre les collectes de raffinat et d'extrait où le signal du polarimètre est nul. La routine de régulation des phénomènes d'adsorption et de désorption des fractions du mélange à traiter utilise comme variable le signal d'un détecteur UV.

Le mélange racémique peut être séparé sur une phase Chiralpak AD (Chiral Technologies Europe) avec un diamètre de particule de l'ordre de 20µm. L'éluant servant à la séparation est un mélange acétonitrile/méthanol (80/20, v/v). La séparation s'effectue à la température de 25°C.

Afin de pouvoir simuler numériquement la séparation, un modèle de celle-ci peut être déterminé. Il est noté qu'il ne s'agit pas de construire un modèle pour le réglage du procédé mais seulement pour simuler le dispositif - les routines de régulation étant rigoureusement indépendantes. Le dispositif utilisé est un VariCol 6 colonnes de diamètre 1cm et de longueur 8.1cm. Dans le cas de cet exemple, la séparation est simulée par un modèle de mélangeur en cascades en utilisant un nombre de 40 plateaux/colonne. Les colonnes se répartissent de la manière suivante :

| Nb de col. total | Nb moyen de col. en Zone 1 | Nb moyen de col. en Zone 2 | Nb moyen de col. en Zone 3 | Nb moyen de col. en Zone 4 |
|---|---|---|---|---|
| 6 | 1 | 2.25 | 2 | 0.75 |

La charge utilisée est à une concentration de 32g/L. Les objectifs sont d'obtenir une pureté de 99% à l'extrait et de 99% au raffinat.

La première routine consiste à positionner un point caractéristique de la zone de séparation en une position cible. Cette première routine n'a besoin d'aucune analyse précise.

L'historique considéré est exprimé en temps réduit c'est à dire le temps divisé par le temps de cycle, il varie entre 0 et 1. L'origine de l'historique correspond au moment où l'éluant arrive à proximité du noeud d'observation. La position cible est fixée au point d'injection de mélange (c'est à dire à une abscisse de 0.54 sur l'historique correspondant au milieu de la période d'injection).

Dans cet exemple, la régulation est mise en route après stabilisation du dispositif, c'est à dire au cycle 15, le système est alors réglé de façon à ce que la position du point caractéristique soit située à la position cible fixée au milieu de la période d'injection. Au cours de la régulation, une variation de 2.1% des temps de rétention est effectuée au cycle 50 en augmentant d'une même valeur les constantes d'adsorption. Dans cet exemple, le débit en zone 2 à appliquer au cycle n+1 est calculé en utilisant les hypothèses et données suivantes :
- les débits en zone 2 appliqués pendant les cycles n-1 et n.
- les abscisses Xn-1 et Xn des points caractéristiques des cycles n-1 et n
- l'hypothèse que les conditions d'élutions sont les mêmes pour les cycles n-1, n et n+1.-

La figure 24 montre l'effet de la première routine sur les puretés des produits extrait (courbe en pointillés) et raffinat (courbe en trait plein) avec une position cible fixe avec une variation du temps de rétention indiquée par la flèche 50 pendant la régulation.

Les conditions opératoires de départ sont :
Q₁=16.3mL/min
Q₂=7.6mL/min
Q_{mélange} =0.4mL/min
Q₄=4.82mL/min
T=1.11min

Où Q₁, Q₂, Q_{mélange} et Q₄ sont respectivement les débits dans les zones 1, zones 2, le débit de mélange à traiter et le débit dans la zone 4, ces zones sont définies d'une façon identique pour les procédés SMB et VariCol et représentées sur la figure 1.

Ces débits mènent à une pureté du raffinat proche de 100% et une pureté d'extrait de 96.7%. Les débits après régulation sont :
Q₁=16.3mL/min
Q₂=7.83mL/min
Q_{mélange} =0.4mL/min
Q₄=4.82mL/min
ΔT=1.11min

Dans ce cas, la pureté du raffinat n'est pas modifiée mais la pureté de l'extrait est sensiblement améliorée par le fait d'avoir amené le point caractéristique à la position cible. Au cycle 50, une perturbation de 2.1% est effectuée menant à une augmentation de 2.1% des temps de rétention. Les débits après perturbation sont :
Q₁=16.3mL/min
Q₂₌8mL/min
Q_{mélange} =0.4mL/min
Q₄=4.82mL/min
ΔT=1.11min

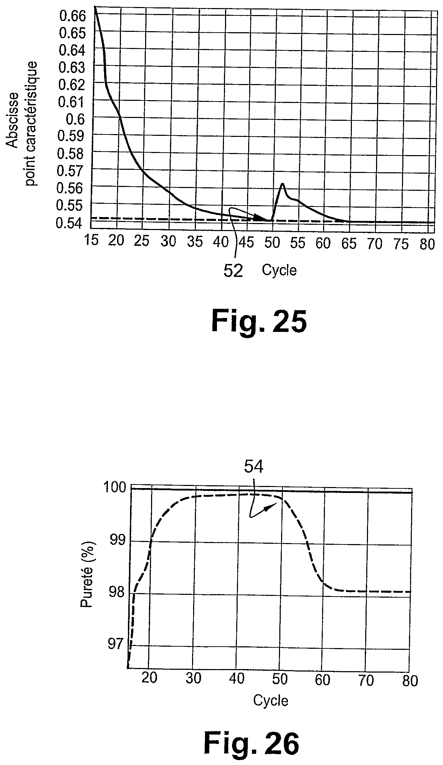

La figure 25 représente l'évolution du point caractéristique (trait plein) au cours du procédé de séparation. On observe que la première routine a amené le point caractéristique d'une abscisse de 0.66 à l'abscisse cible de 0.54. Au cycle 50, la position du point caractéristique est modifiée par la perturbation de la rétention (flèche 52). La routine étant toujours active, le point caractéristique est rapidement ramené à la position cible (pointillés), évitant ainsi une chute des puretés comme le montre la figure 24.

Afin de mieux voir l'intérêt du procédé, la figure 26 illustre l'impact de la variation de la rétention sur les puretés alors que la première routine est désactivée au cycle 45. On voit que sans l'activation de la routine, la pureté de l'extrait (pointillés) diminue lorsque le temps de rétention varie (flèche 54).

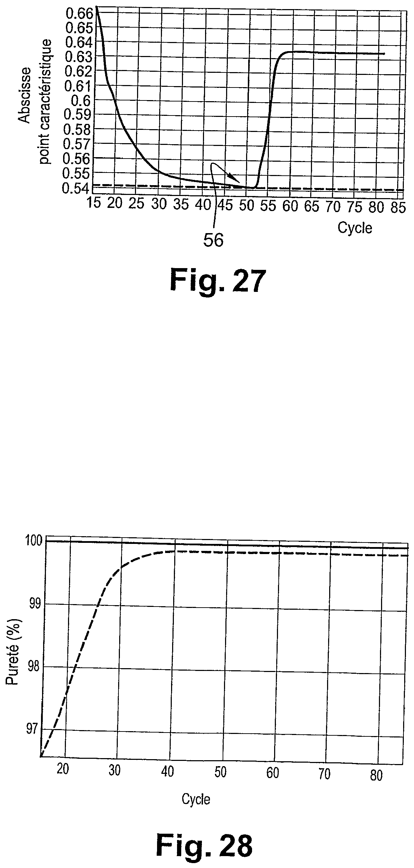

La figure 27 montre l'évolution du point caractéristique (trait plein). Lorsque la première routine est désactivée, la position du point caractéristique s'écarte de la position cible à compter de la flèche 56 (pointillés) induisant une pollution de la ligne d'extrait.

La deuxième routine de définition de la position cible utilise les puretés des lignes d'extrait et de raffinat afin de positionner au mieux la position cible de la première étape. Au cours de cette routine, la position cible est modifiée de façon à ce que les puretés des produits extrait et raffinat soient supérieures ou égales à 99%.

Cette routine modifie la position cible du point caractéristique régulée par la première routine (agissant sur le débit en zone 2). La modification de la position cible du point caractéristique prend en compte une fonction dépendante des puretés obtenues et des puretés cibles.

La figure 28 montre le positionnement du point caractéristique (première routine) avec définition du point cible (deuxième routine). L'extrait est en pointillés et le raffinat en trait plein. On voit que la pureté de l'extrait reste au-dessus des spécifications de 99%.

Les débits de départ sont :
Q₁=16.3mL/min
Q₂=7.6mL/min
Q_{mélange} =0.4mL/min
Q₄=4.82mL/min
ΔT=1.11min

Les débits après régulation sont :
Q₁=16.3mL/min
Q₂=7.84mL/min
Q_{mélange} =0.4mL/min
Q₄=4.82mL/min
ΔT=1.11min

La troisième routine est ajoutée et modifie la quantité de charge injectée en fonction des analyses. Cette routine a pour conséquence de perturber le procédé et les première et deuxième routines permettent de s'adapter à ces perturbations. Le procédé est perturbé pour améliorer la quantité de produit que le procédé peut traiter. La modification de la quantité de charge prend en compte une fonction dépendante des puretés obtenues et des puretés cibles.

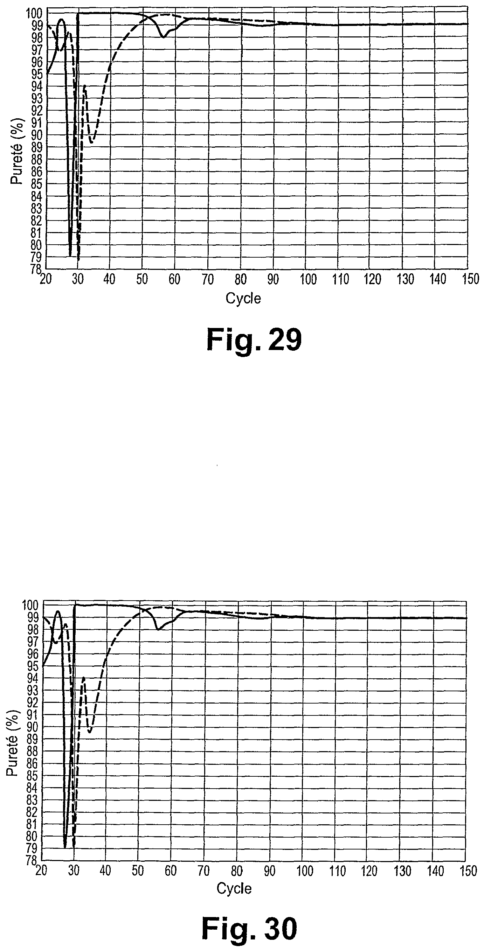

La figure 29 montre l'effet sur le raffinat et sur l'extrait du positionnement du point caractéristique alors que la quantité de mélange est modifiée. Le raffinat est en trait plein et l'extrait en pointillés.

Les débits de départ sont :
Q₁=16.3mL/min
Q₂=7.6mL/min
Q_{mélange}=0.52mL/min
Q₄=4.82mL/min
ΔT=1.11min

Le débit de charge de départ est supérieur au débit optimal. C'est à dire, que dans les conditions de départ, il est impossible d'obtenir un extrait et un raffinat avec une pureté de 99%. Les débits après régulation sont :
Q₁=16.3mL/min
Q₂=7.62mL/min
Q_{mélange}=0.46mL/min
Q₄=4.82mL/min
ΔT=1.11min

La troisième routine a adapté le débit de charge pour permettre d'atteindre les spécifications de 99% de pureté pour les différentes fractions.

La quatrième routine consiste en la régulation des zones 1 et 4. Cette régulation doit empêcher des pollutions venant des zones 1 et 4. Elle ne nécessite aucune analyse.

Dans cet exemple, les débits en zone 1 et 4 à appliquer au cycle n+1 sont calculés en utilisant les hypothèses et données suivantes :
- les débits en zone 1 et 4 appliqués pendant les cycles n-1 et n.
- les abscisses des points en zone 1 et en zone 4 des cycles n-1 et n
- l'hypothèse que les conditions d'élutions sont les mêmes pour les cycles n-1, n et n+1.

La figure 30 montre le réglage du dispositif avec toutes les routines actives. L'extrait est en pointillés et le raffinat en trait plein.

Les débits de départ sont :
Q₁=16.3mL/min
Q₂=7.6mL/min
Q_{mélange}=0.52mL/min
Q₄=4.82mL/min
ΔT=1.11min

Les débits après régulation sont :
Q₁₌13mL/min
Q₂=7.62mL/min
Q_{mélange}=0.46mL/min
Q₄=5.64mL/min
ΔT=1.11min

Sur cet exemple, le débit de charge au démarrage est trop élevé pour pouvoir obtenir des puretés d'extrait et de raffinat au moins égales à 99%. Ainsi, pour que les puretés soient correctes, le débit de charge a été réduit. Le volume d'éluant a également été réduit sur cet exemple. En effet, celui-ci correspond à la différence entre les débits Q₁ et Q₄ en zones 1 et 4. Q₁ étant diminué et Q₄ augmenté, le débit d'éluant a diminué. Ainsi, le volume d'éluant utilisé sur un cycle a été réduit de 36%.

De façon plus générale, l'ensemble de ces routines a été testé et a montré son efficacité pour des conditions de débits et périodes initiales permettant d'obtenir des puretés initiales de raffinat et d'extrait supérieures à la pureté du mélange à séparer.

### EXEMPLE 2 :

Cet exemple illustre les différentes étapes du procédé de séparation sur un dispositif de séparation à injection continue de type SMB.

La séparation choisie est l'exemple 2 du brevet US2002174769.

Dans cet exemple, la variable spécifique utilisée correspond à la somme des concentrations de chacun des composés en mouvement dans le dispositif (ce qui correspond par exemple à la mesure de la densité, ou à la combinaison de plusieurs absorbance à différentes longueurs d'onde UV) Le point caractéristique utilisé est un extremum de l'historique constitué par le maximum du signal.

Dans cet exemple, la séparation est celle du fructose et du glucose sur une phase stationnaire de type Dowex 99 monosphère (350µm) ayant pour éluant de séparation l'eau à une température de 65°C. Dans ces conditions, l'isotherme d'adsorption est quasi-linéaire.

Le système utilisé possède les caractéristiques suivantes :

| Nb de col. total | Nb de col. en zone 1 | Nb de col. en zone 2 | Nb de col. en zone 3 | Nb de col. en zone 4 | Diamètre de col. | Longueur de col. |
|---|---|---|---|---|---|---|
| 6 | 1 | 2 | 2 | 1 | 2.6cm | 160cm |

| Cmélange | %fructose | %glucose |
|---|---|---|
| 100g/L | 50% | 50% |

L'historique considéré est exprimé en temps réduit c'est à dire le temps divisé par le temps de cycle, il varie entre 0 et 1. L'origine de l'historique correspond au moment où l'éluant arrive à proximité du noeud d'observation.

La position cible est fixée au point d'injection du mélange (c'est à dire à une abscisse de 0.56 sur l'historique, correspondant au milieu de la période d'injection). Le paramètre modifié est le débit en zone 2.

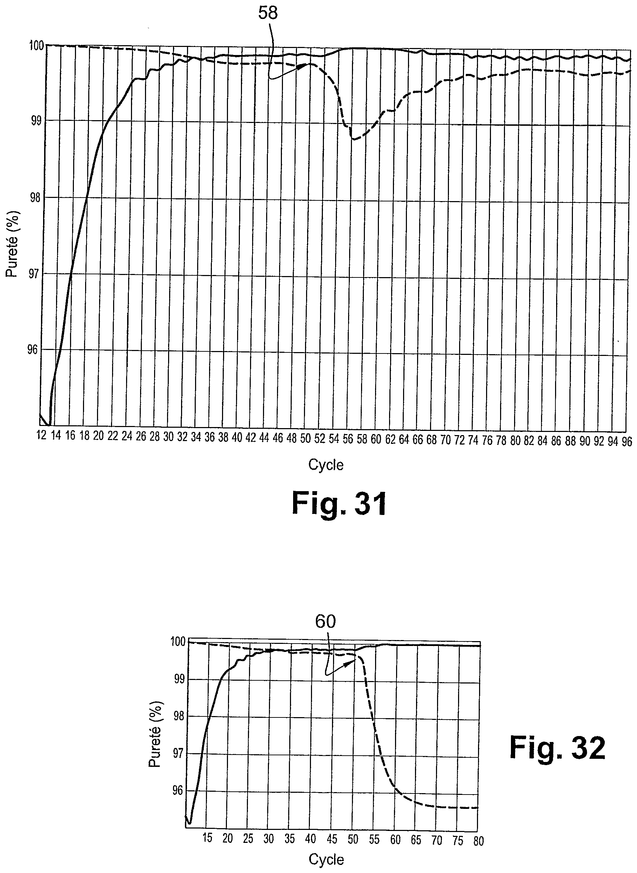

Le procédé démarre une fois le dispositif stabilisé avec les débits de démarrage, c'est à dire au cycle 11. Puis après régulation et stabilisation, une variation moyenne de 3.6% des temps de rétention est effectuée en augmentant d'une même valeur les constantes d'adsorption. La figure 31 représente l'évolution des puretés avec la régulation du dispositif puis la variation de la rétention (pour simuler une perturbation au cycle 50, flèche 58) avec la première routine active. Le raffinat est en trait plein et l'extrait en pointillés. On voit que la perturbation induit une diminution de la pureté de l'extrait, mais que le procédé permet ensuite une augmentation de la pureté de l'extrait. On règle la position du point caractéristique en une position cible fixe.

Les débits de départ sont :
Q₁=115mL/min
Q₂=73mL/min
Q_{mélangé}=8mL/min
Q₄=57mL/min
ΔT=7min

Les débits après régulation sont :
Q₁=115mL/min
Q₂=69.5mL/min
Q_{melange}=8mL/min
Q₄=57mL/min
ΔT=7min

Les débits après perturbation (flèche 58) en utilisant la régulation sont :
Q₁=115mL/min
Q₂=72.07mL/min
Q_{mélange}=8mL/min
Q₄=57mL/min
ΔT=7min

La figure 32 montre en comparaison l'évolution des puretés avec la régulation du dispositif, puis la simulation (flèche 60) de variation de la rétention au cycle 50 après avoir désactivé la première routine. Le raffinat est en trait plein et l'extrait en pointillés. On voit que la pureté de l'extrait diminue comme cela était le cas sur la figure 31 ; toutefois, à la différence de la figure 31, la pureté de l'extrait chute jusqu'à se stabiliser à une valeur inférieure à 96%.

On peut constater que maintenir point caractéristique sur une position cible permet de maintenir les deux puretés à un niveau comparable à la situation précédant la perturbation (figure 31) ; sans la première routine, la pureté de l'extrait reste basse (figure 32).

Au cours de la deuxième routine, la position cible du maximum de signal varie afin d'ajuster les puretés à une valeur au moins égale à 99%.

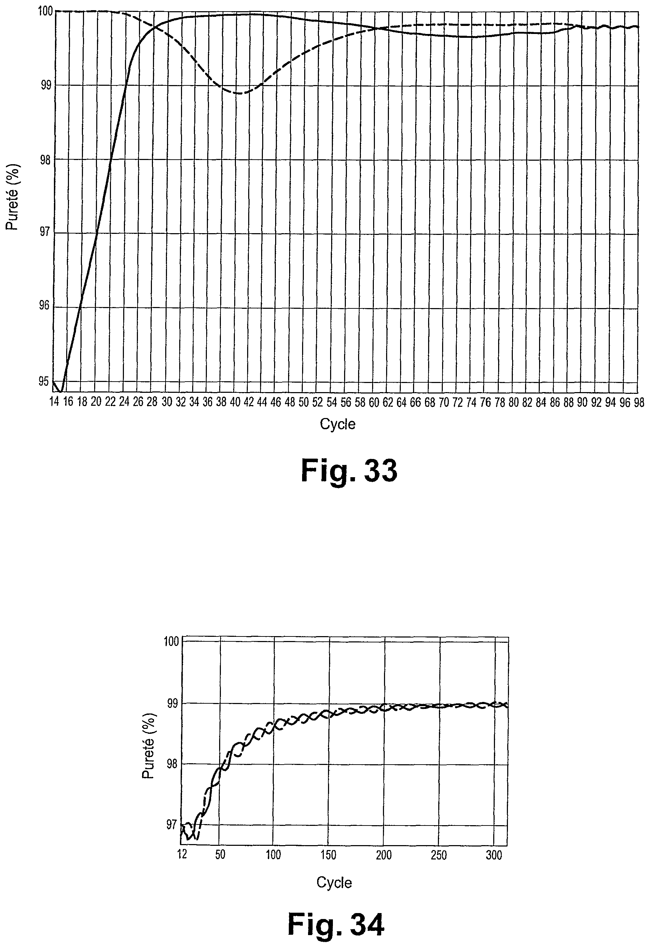

La figure 33 montre l'évolution des puretés avec le positionnement du point caractéristique avec une position cible définie par la deuxième routine. Le raffinat est en trait plein et l'extrait en pointillés.

Les débits de départ sont :
Q₁=115mL/min
Q₂=73mL/min
Q_{mélange}=8mL/min
Q₄=57mL/min
ΔT=7min

Dans cet exemple, les conditions de débit initiales mènent à une pureté de raffinat basse, qui va être compensée et régulée automatiquement pour mener aux débits après régulation suivants :
Q₁=115mL/min
Q₂=69.7mL/min
Q_{mélange}=8mL/min
Q₄=57mL/min
ΔT=7min

La modification de la position cible du point caractéristique prend en compte une fonction dépendante des puretés obtenues et des puretés cibles.

Au cours de la troisième routine, le débit de mélange est optimisé afin que les puretés soient au moins égales à 99%.

La figure 34 montre l'évolution des puretés avec le positionnement du point caractéristique et la modification de la quantité de mélange injectée. Le raffinat est en trait plein et l'extrait en pointillés.

Les débits de départ sont :
Q₁=115mL/min
Q₂=67mL/min
Q_{mélange}=13.76mL/min
Q₄=57mL/min
ΔT=7min

Les débits après régulation sont :
Q₁=115mL/min
Q₂=68.24mL/min
Q_{mélange}=11.21mL/min
Q₄=57mL/min
ΔT=7min

La modification de la quantité injectée est calculée par une fonction dépendante des puretés obtenues et des puretés cibles.

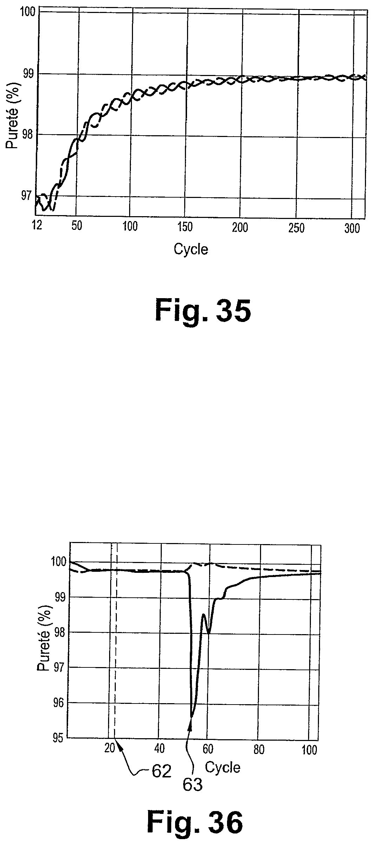

La quatrième routine permet de déterminer les débits en zone 1 et 4 et d'éviter ainsi les fuites dans ces mêmes zones. La figure 35 montre l'évolution des puretés avec le procédé avec les quatre routines actives. Le raffinat est en trait plein et l'extrait en pointillés.

Les débits de départ sont :
Q₁=115mL/min
Q₂=67mL/min
Q_{mélange}=13.76mL/min
Q₄=57mL/min
ΔT=7min

Les débits après régulation sont :
Q₁=105mL/min
Q₂=68.24mL/min
Q_{mélange}=11.21mL/min
Q₄₌59mL/min
ΔT=7min

Au cours de cet exemple, le débit de charge de démarrage est trop élevé et il ne permet pas d'obtenir des puretés satisfaisantes. Afin que celles-ci soient au moins égales à 99%, le débit de charge a été réduit. De plus, la quatrième routine a permis une régulation du volume d'éluant. Celui-ci a été diminué de 20.7%.

De façon plus générale, l'ensemble de ces routines a été testée et a montré son efficacité pour des conditions de débits et périodes initiales permettant d'obtenir des puretés initiales de raffinat et d'extrait supérieures à la pureté du mélange à séparer.

### EXEMPLE 3 :

Cet exemple illustre les différentes étapes du procédé de séparation sur un dispositif de séparation à injection discontinue de type CycloJet.

Dans cet exemple, les routines de positionnement du point caractéristique, de définition du point cible, de modification de la quantité de mélange utilisent le signal d'un détecteur polarimétrique comme variable spécifique ; le point caractéristique utilisé est le point situé entre les collectes de raffinat et d'extrait où le signal du polarimètre est nul. La molécule de séparation est le 1,2,3,4-tetrahydro-1-naphtol. L'éluant de la séparation est un mélange Heptane/IPA/Acide trifluoroacérique (95/5/0.2 en volume). La phase utilisée pour la séparation est une phase Chiralpak AD de 20µm. Un modèle de la séparation a été déterminé. Il est noté qu'il ne s'agit pas de construire un modèle pour le réglage du procédé mais seulement pour simuler le dispositif.

La publication de O. Ludemann-Hombourger, R.M. Nicoud et M. Bailly dans Séparation Science and technology, 35(12), pp 1829-1862, 2000 donne tous les paramètres nécessaires à la simulation du procédé.

La longueur de colonne considérée dans cet exemple est 50cm pour un diamètre interne de 1cm. Le débit traversant la colonne pendant toute la séquence est noté Qel et est égal à 25 mL/min. La durée du cycle CycloJet est notée ΔT. La séquence du cycle est exprimée comme suit : collecte du raffinat entre 0 et traf, injection à tinj, collecte de l'extrait entre text et ΔT. On définit ensuite les temps réduits : Xraf = traf/ΔT ; Xinj = tinj/ΔT, Xext = text/ΔT. Dans les exemples suivants, Xraf = 0.3, Xinj = 0.45 et Xext = 0.6.

L'historique considéré est exprimé en temps réduit, c'est à dire le temps divisé par le temps de cycle, il varie entre 0 et 1. L'origine de l'historique correspond au début de la séquence de collecte du produit le mois retenu.

La première routine consiste à positionner le point caractéristique en une position cible (au point d'injection Xinj défini précédemment et correspondant à une abscisse de 0.45 sur l'historique). Cette routine ne nécessite pas la connaissance des puretés. Dans cet exemple, c'est la variation de la période du procédé qui permet cette régulation.

La figure 36 illustre l'évolution des puretés avec le réglage avec la première routine du procédé. Le raffinat est en trait plein et l'extrait en pointillés. Le réglage débute au cycle 21 (flèche 62) après stabilisation du dispositif avec les paramètres opératoires de démarrage. Puis au cycle 50, on réalise une variation de -4.8% des temps de rétention des produits (flèche 63). Les conditions de départ sont :
ΔT=4.178min
Vinj = 1.57mL

Les conditions après régulation sont :
ΔT = 3.983min
Vinj = 1.57mL

La deuxième routine de définition de la position cible utilise des analyses de l'extrait et du raffinat afin de positionner au mieux la position cible de la première routine. La deuxième routine est ajoutée à la première routine. La deuxième routine utilise les puretés des extrait et raffinat. Au cours de cette routine, la position cible du point caractéristique est calculée de façon à ce que les puretés soient au moins égales à 99%.

La modification de la position cible du point caractéristique prend en compte une fonction dépendante des puretés obtenues et des puretés cibles.

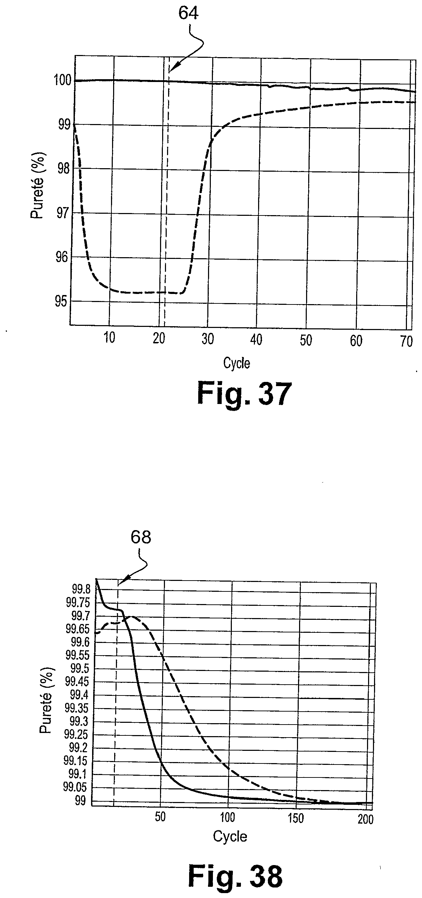

La figure 37 montre l'évolution des puretés avec le procédé avec les première et deuxième routines actives. Le raffinat est en trait plein et l'extrait en pointillés. Les conditions de départ sont :
ΔT = 4.05min
Vinj = 1.57mL

Les première et deuxième routines du procédé sont mises en route au cycle 21 (flèche 64), au moment de la régulation, la position du point cible sur l'historique est égale à 0.517. Les conditions après régulation sont :
ΔT = 4.17min
Vinj = 1.57mL

Après mise en route des première et deuxième routines les puretés des deux fractions sont montées au dessus de 99.5% et la position du point caractéristique a été définie à 0.452.

La troisième routine modifie la quantité de mélange (ou charge) injecté en fonction des analyses. Elle est mise en oeuvre par la connaissance des puretés des extrait et raffinat. Les spécifications de puretés dans ce cas sont de 99% sur les deux produits. Le calcul de la position cible se fait de la même manière qu'au cours de la deuxième routine.

Le calcul de la quantité de charge injectée se fait à partir d'une fonction dépendante des puretés obtenues et des puretés cibles.

La figure 38 montre l'évolution des puretés avec le procédé avec les première, deuxième et troisième routines actives. Le raffinat est en trait plein et l'extrait est en pointillés. Le procédé est mis en route au cycle 25 (flèche 68) Les conditions de départ sont :
ΔT=4.147min
Vinj = 3.96mL

Les conditions après régulation sont :
ΔT = 3.968min
Vinj = 4.88mL

La mise en oeuvre des première, deuxième et troisième routines ont permis de passer à une situation où les deux puretés sont supérieures aux puretés cibles, en augmentant le volume injecté ainsi qu'en réduisant le temps de cycle, ceci permettant d'accroitre de 29% la quantité de mélange traitée par unité de temps.

La quatrième routine permet d'ajuster les collectes de raffinat et d'extrait.

Dans le cas général d'un procédé à accumulation incluant une collecte totale du produit le plus retenu dans sa séquence, la régulation de cette étape est effectuée lorsque par exemple il y a une différence de la position cible et de la position du point caractéristique de la désorption en modifiant la durée de l'étape de collecte. On peut noter que la modification de la durée d'étape de collecte correspond à la modification du volume de phase mobile associé à la désorption du produit le plus retenu.

Dans le cas du présent exemple CycloJet, il est considéré que le point caractéristique de la désorption est désigné par un seuil Y4.1* en abscisse de signal UV situé entre le début de la collecte d'extrait et la fin d'injection d'éluant.

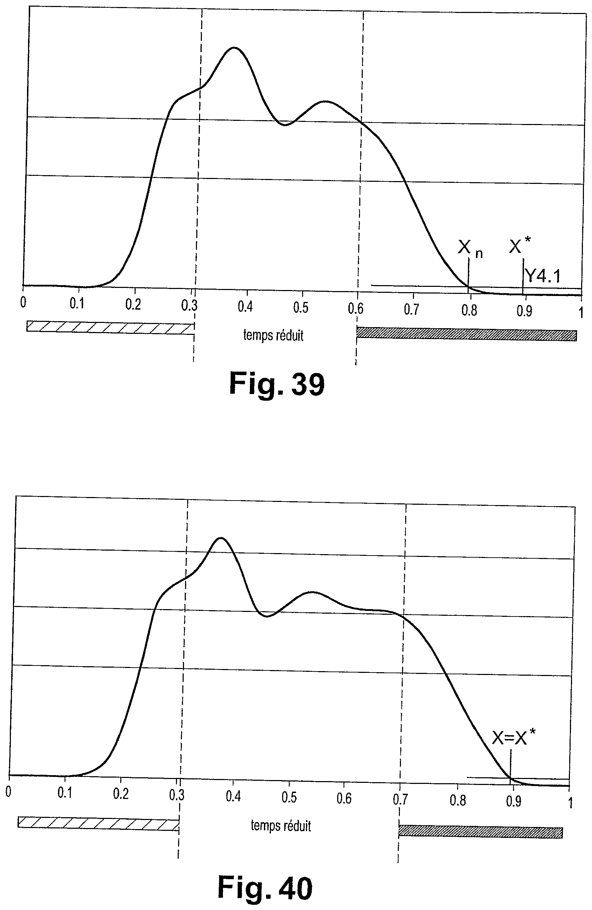

Avec une collecte d'extrait commençant à partir de 60% de la période (Xext = 0.6) la position du point caractéristique est obtenue à Xn = 0.8. (figure 39)

Définissons à X*= 0.9 la position cible, on constate un écart de 0.1 que l'on peut réduire en modifiant la durée de l'étape de collecte d'extrait. Par exemple en répercutant cet écart sur la position de début de collecte d'extrait. Xext passe alors de 0.6 à 0.7 (figure 40).

Dans le cas général d'un procédé à accumulation incluant une collecte totale du produit le moins retenu dans sa séquence, la régulation de cette étape est effectuée lorsque par exemple il y a une différence la position cible et la position du point caractéristique de l'adsorption en modifiant la durée de l'étape de collecte. Notons que la modification de la durée d'étape de collecte correspond à la modification du volume de phase mobile associé à la collecte du produit le moins retenu.

Dans le cas de présent exemple CycloJet, il est considéré que le point caractéristique de l'adsorption est désigné par un seuil Y4.2* de signal UV situé entre le début de l'injection d'éluant et la fin de la collecte de raffinat.

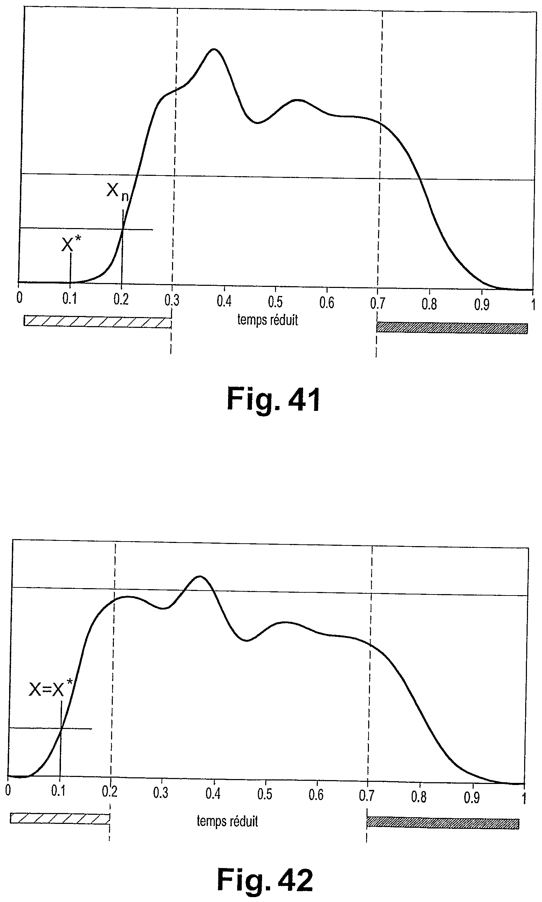

Avec une collecte de raffinat se terminant à partir de 30% de la période (Xraf = 0.3) la position du point caractéristique est obtenue à Xn = 0.2. (figure 41)

Définissons à X*= 0.1 la position cible, on constate un écart de -0.1 que l'on peut réduire en modifiant la durée de l'étape de collecte de raffinat. Par exemple on répercute cet écart sur la position de début de collecte d'extrait. Xraf passe alors de 0.3 à 0.2 (figure 42).

Lorsque l'on collecte de l'extrait ou du raffinat en CycloJet, on injecte de l'éluant, en réduisant les durées des étapes de collectes d'extrait et de raffinat, on a consécutivement réduit la consommation d'éluant.

Dans ce dernier cas, la quatrième routine a permis une régulation de la quantité d'éluant, avant régulation, l'éluant était injecté pendant 70% de la séquence du cycle, après régulation l'éluant est injecté pendant 50% du cycle. Il s'agit d'une réduction de 28% de la consommation d'éluant.

D'une façon plus générale, l'ensemble de ces routines a été testée et a montré son efficacité pour des conditions de débits et périodes initiales permettant d'obtenir des puretés initiales de raffinat et d'extrait supérieures à la pureté de du mélange à séparer.

### EXEMPLE 4

Cet exemple illustre les différentes étapes du procédé de séparation sur un procédé de séparation à injection continue VariCol. La séparation choisie est celle des isomères du mélange racémique de la tétralone décrit dans WO99/57089 - ayant pour titre *Process for the production of enantiomerically pure or optically enriched sertralone-tetralone using continuous chromatography.*

Dans cet exemple, les routines de positionnement du point caractéristique dans la zone de séparation, de définition du point cible, de modification de la quantité de mélange utilisent le signal d'un détecteur polarimétrique comme variable spécifique ; le point caractéristique utilisé est le point situé entre les collectes de raffinat et d'extrait où le signal du polarimètre est nul - il n'est donc pas nécessaire pour utiliser l'invention d'effectuer un étalonnage du détecteur puisque ce ne sont pas les valeurs des concentrations qui sont recherchées mais un point caractéristique du signal.

Le mélange racémique peut être séparé sur une phase Chiralpak AD (Chiral Technologies Europe) avec un diamètre de particule moyen de 20µm. L'éluant servant à la séparation est composé d'acétonitrile pur. La séparation s'effectue à la température de 25°C.

Le dispositif expérimental utilisé est un VariCol 5 colonnes de diamètre 5 cm et de longueur 11.5 cm. Dans le cas de cette séparation, les colonnes se répartissent de la manière suivante :

| Nb de col. total | Nb moyen de col. en Zone 1 | Nb moyen de col. en Zone 2 | Nb moyen de col. en Zone 3 | Nb moyen de col. en Zone 4 |
|---|---|---|---|---|
| 5 | 1 | 1.8 | 1.6 | 0.6 |

Afin de réaliser des analyses de puretés 'off line' des produits extrait et raffinat, un dispositif d'analyse composé de deux réservoirs de collecte, un pour l'extrait, l'autre pour le raffinat, d'une boucle d'injection et d'une chaîne de chromatographie analytique. A une fréquence régulière (tous les 3 cycles de fonctionnement dans le cas de cet exemple), les lignes de sortie extrait et raffinat sont collectées pendant la durée d'un cycle. Pour chacun des réservoirs de collecte, après une étape d'homogénéisation, un échantillon de produit est prélevé puis injecté dans la chaîne de chromatographie analytique à l'aide d'une boucle d'injection. Le temps d'analyse des produits extrait et raffinat varie d'une durée inférieure à un cycle à une durée de plusieurs cycles selon la méthode analytique. Les valeurs de puretés mesurées lors des analyses de chaque réservoir sont envoyées au contrôleur.

La charge utilisée est à une concentration de 13g/L. Les objectifs sont d'obtenir le produit le plus retenu, l'extrait, à une pureté de 90% et le produit le moins retenu, le raffinat, à une pureté de 98.5%.

Dans cet exemple, les trois premières routines du contrôle sont activées, soit :
▪ La première routine qui consiste à positionner un point caractéristique de la zone de séparation en une position cible. Cette première routine n'a besoin d'aucune analyse de pureté.
▪ La deuxième routine de définition de la position cible utilisant les puretés des lignes d'extrait et de raffinat qui positionne au mieux la position cible de la première étape. Au cours de cette routine, la position cible est modifiée de façon à ce que les puretés des produits extrait et raffinat correspondent aux spécifications.
▪ La troisième routine qui modifie la quantité de charge injectée est modifiée en fonction des analyses précises des puretés de façon à ce que les puretés des produits extrait et raffinat soient supérieures ou égales aux spécifications.

Dans cet exemple, la durée des analyses de l'extrait et du raffinat implique un retard de 3 cycles sur la connaissance des puretés. Ainsi, la première routine de la régulation est effectuée tous les cycles tandis que les analyses précises des puretés extrait et raffinat sont disponibles tous les 3 cycles. Les actions des étapes 2 et 3 sont modifiées dès que des mesures de puretés précises sont disponibles, soit tous les 3 cycles.

Par exemple, extrait et raffinat sont collectés pendant la durée du cycle 10, et analysés pendant les cycles 11 et 12, les valeurs des puretés sont donc disponibles en fin de cycle 12. Au cycle 13, il est possible d'avoir une modification de l'action sur la consigne de position du point caractéristique et sur le débit de charge. Cette action au cycle 13 est basée sur la valeur des puretés du cycle 10. Le procédé est donc capable de réagir lorsqu'il y a à la fois un retard et un espacement des analyses précises des extrait et raffinat.

La régulation est mise en route au démarrage de l'unité avec les débits suivants :
Q₁=253.6mL/min
Q₂=197.9mL/min
Q_{mélange}=8mL/min
Q₄=152.6mL/min
T=1.4min

Où Q₁, Q₂, Q_{mélange} et Q₄ sont respectivement les débits dans les zone I, zone II, le débit de mélange à traiter et le débit dans la zone IV, ces zones sont définies d'une façon identique pour les procédés SMB et VariCol et représentées sur la figure 1.

Ces débits initiaux mènent à une pureté du raffinat proche de 79% et une pureté d'extrait de 99%.

Les débits après régulation (c'est à dire pour une pureté de raffinat de 98%, une pureté d'extrait de 90% et un débit de charge optimisé) sont :
Q₁=253.6mL/min
Q₂=177.5mL/min
Q_{mélange}=15.2mL/min
Q₄=152.6mL/min
ΔT=1.4min

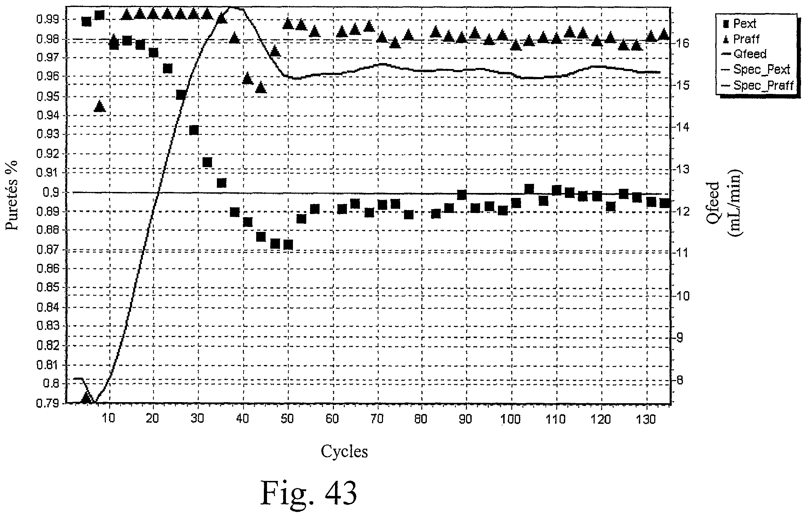

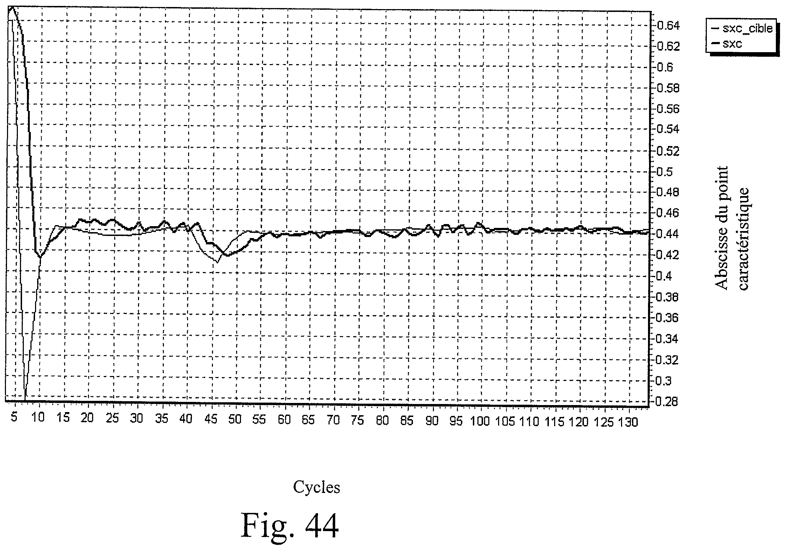

La figure 43 représente l'évolution des puretés d'extrait (carrés), de raffinat (triangles) et du débit de charge (trait plein en gras) au cours du procédé de séparation. La figure 44 représente l'évolution de la position du point caractéristique (trait plein gras) ainsi que de sa position de consigne (trait plein fin). Sur la figure 43, on observe que la pureté du raffinat est rapidement améliorée et amenée au dessus de 98%. Cette action est due aux actions combinées des première et deuxième routines qui ont éloigné le point caractéristique de la ligne de raffinat, en passant d'une abscisse de 0.64 à une abscisse de 0.42.

Au cycle 10, les deux produits sont au dessus des spécifications de puretés et le débit de charge peut donc être augmenté. Au cycle 40, les puretés sont inférieures aux spécifications aussi le débit de charge est réajusté à l'aide de la troisième routine.

Dans cet exemple, la pureté du raffinat est fortement dégradée au démarrage de l'unité et celle-ci est ramenée aux spécifications en une dizaine de cycles. La pureté d'extrait est ajustée à 90% en une quarantaine de cycles. Le débit de charge est régulé (passage de 8ml/min à 15.2ml/min) en une soixantaine de cycle.

### EXEMPLE 5

Cet exemple illustre les différentes étapes du procédé de séparation sur un procédé de séparation à injection continue SMB.

La séparation choisie est l'exemple du brevet US2002174769.

Dans cet exemple, la variable spécifique utilisée par la première routine correspond à la différence des concentrations de chacun des composés en mouvement dans le dispositif le point caractéristique associé est l'annulation du signal dans la zone de séparation. La variable spécifique utilisée par la quatrième routine est la somme des concentrations, les points caractéristiques associés sont des seuils relatifs. Dans cet exemple, les variables spécifiques et les points caractéristiques associés ne nécessitent pas de mesure précise de concentrations, ce qui autorise de ne pas étalonner les détecteurs donnant les variables spécifiques.

Dans cet exemple, la séparation est celle du fructose et du glucose sur une phase stationnaire de type Dowex 99 monosphère (350µm) ayant pour éluant de séparation l'eau à une température de 65°C. Dans ces conditions, l'isotherme d'adsorption est quasi-linéaire.

Le système utilisé possède les caractéristiques suivantes :

| Nb de col. total | Nb moyen de col. en Zone 1 | Nb moyen de col. en Zone 2 | Nb moyen de col. en Zone 3 | Nb moyen de col. en Zone 4 | Diamètre de colonne | Longueur de colonne |
|---|---|---|---|---|---|---|
| 6 | 1 | 2 | 2 | 1 | 2.6cm | 160cm |

| Cmélange | %fructose | %glucose |
|---|---|---|
| 100g/L | 50% | 50% |

Dans cet exemple, les quatre routines du contrôle sont activées, soit :
▪ La première routine qui consiste à positionner un point caractéristique de la zone de séparation en une position cible. Cette première routine n'a besoin d'aucune analyse de pureté.
▪ La deuxième routine de définition de la position cible utilisant les puretés des lignes d'extrait et de raffinat qui positionne au mieux la position cible de la première étape. Au cours de cette routine, la position cible est modifiée de façon à ce que les puretés des produits extrait et raffinat correspondent aux spécifications.
▪ La troisième routine qui modifie la quantité de charge injectée est modifiée en fonction des analyses précises des puretés de façon à ce que les puretés des produits extrait et raffinat soient supérieures ou égales aux spécifications
▪ La quatrième routine qui consiste à positionner les points caractéristiques de chacune des zones I et IV en une position cible. Elle permet de régler ces mêmes zones avec comme conséquence la modification du débit d'éluant.

Le point caractéristique en zone I doit être situé à une abscisse cible définie en milieu de la zone I et la valeur seuil choisie est déterminée à 1% du maximum du signal UV. Il en est de même en zone IV pour une abscisse cible située en zone IV. La valeur seuil est donc flottante en fonction des valeurs maximum et minimum de la variable spécifique correspondant à la somme des deux concentrations.

Les puretés sont calculées en effectuant une moyenne sur un cycle des compositions extrait et raffinat. Dans cet exemple numérique, un temps de retard de 3 cycles sur la connaissance des puretés a été ajouté.

La régulation est mise en route au démarrage de l'unité avec les débits suivants :
Q₁=115mL/min
Q₂=67mL/min
Q_{mélange}=13.76mL/min
Q₄=57mL/min
T=7min

Où Q₁, Q₂, Q_{mélange} et Q₄ sont respectivement les débits dans les zone I, zone II, le débit de mélange à traiter et le débit dans la zone IV, ces zones sont définies d'une façon identique pour les procédés SMB et VariCol et représentées sur la figure 1.
Ces débits mènent à une pureté du raffinat proche de 97% et une pureté d'extrait de 97%.

Les débits après régulation (c'est à dire pour une pureté de raffinat de 99%, une pureté d'extrait de 99% et des débits de charge et d'éluant optimisés) sont :
Q₁=94.2mL/min
Q₂=68.2mL/min
Q_{mélange}=1 1.25mL/min
Q₄=58.2mL/min
ΔT=1.4min

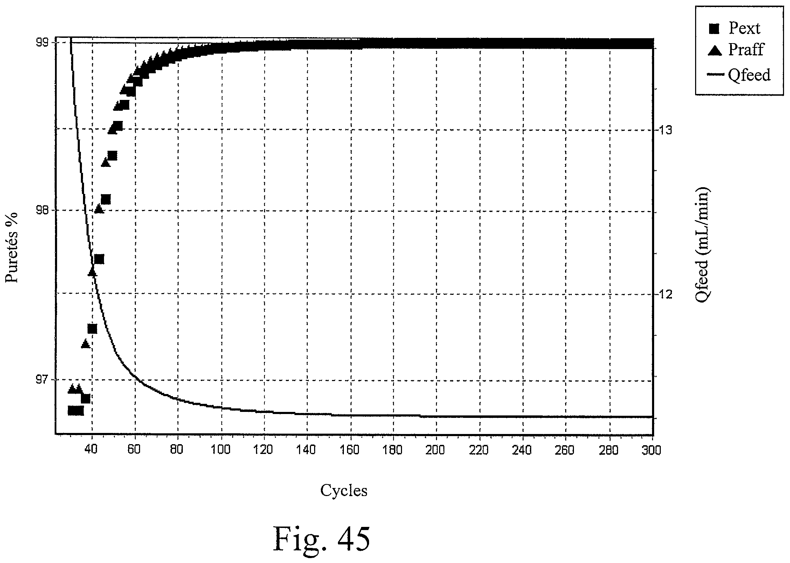

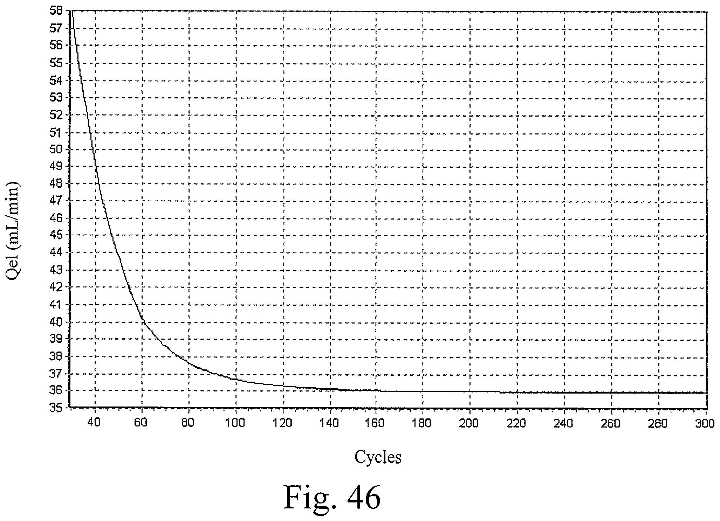

La figure 45 représente l'évolution des puretés d'extrait (carré), de raffinat (triangle) et du débit de charge (trait plein en gras) au cours du procédé de séparation. La figure 46 représente l'évolution du débit d'éluant au cours de la séparation.

Au cours de cet exemple, le débit de charge de démarrage est trop élevé et il ne permet pas d'obtenir des puretés satisfaisantes. Afin que celles-ci soient au moins égales à 99%, le débit de charge a été réduit. On observe une bonne régulation malgré la présence de 3 cycles de retard sur la connaissance des puretés. De plus, celle-ci est aussi rapide qu'en l'absence de cycles de retard (cf figure 35).

La quatrième routine a permis une régulation du volume d'éluant en le diminuant de 37.9%.

### EXEMPLE 6 :

Cet exemple illustre l'effet de la première routine de contrôle sur un procédé de séparation à injection discontinue de type celui décrit dans la demande FR 2 889 077.

Dans cet exemple, la routine de positionnement du point caractéristique utilise le signal d'un détecteur polarimétrique comme variable spécifique ; le point caractéristique utilisé est le point situé entre les collectes de raffinat et d'extrait où le signal du polarimètre est nul.

La molécule de séparation est le 1,2,3,4-tetrahydro-1-naphtol. L'éluant de la séparation est un mélange Heptane/IPA/Acide trifluoroacétique (95/5/0.2 en volume). La phase utilisée pour la séparation est une phase Chiralpak AD de 20µm. Un modèle de la séparation a été déterminé afin de simuler le dispositif.

La publication de O. Ludemann-Hombourger, R.M. Nicoud et M. Bailly dans Séparation Science and Technology, 35 (12), pp 1829-1862, 2000 donne tous les paramètres nécessaires à la simulation du procédé.

Les grandeurs utilisées pour la simulation sont :
- 2 colonnes de 1 cm de diamètre interne et 20 cm de long ;
- la température est de 25°C
- le débit d'éluant de 22 mL/min, sauf lorsque la charge est injectée, le débit d'éluant est alors nul
- une charge composée du racémique dissous dans l'éluant à une concentration de 20g/L ; cette charge est injectée à un débit de 15.7 mL/min pendant 0.1min au début de chaque période, en entrée de la seconde colonne lors de la première période et en entrée de la première colonne lors de la seconde période.
- la période est ΔT, la durée du cycle est de 2 périodes soit 2.ΔT.

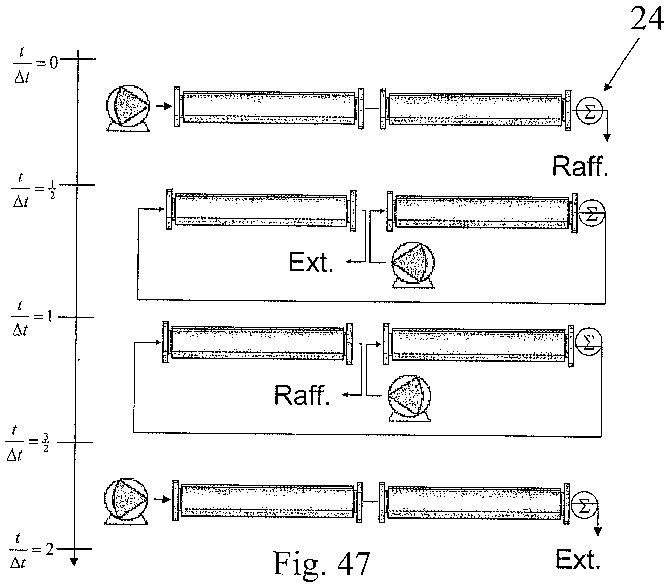

On simule la séquence de la figure 47, répétée de façon cyclique.

Dans cet exemple, seule la première routine est activée. Le détecteur utilisé au noeud d'observation 24 est situé en sortie de seconde colonne, correspond à un polarimètre renvoyant une variable spécifique représentative de la différence des deux concentrations. Le point caractéristique 28 est le point de la zone de séparation où le signal est nul. La première routine consiste à positionner le point caractéristique 28 en une position cible 32, par exemple à l'abscisse 0,9. Cette routine ne nécessite pas la connaissance des puretés.

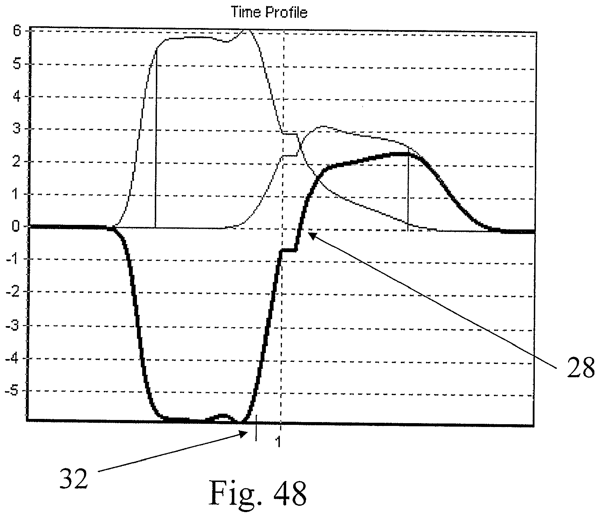

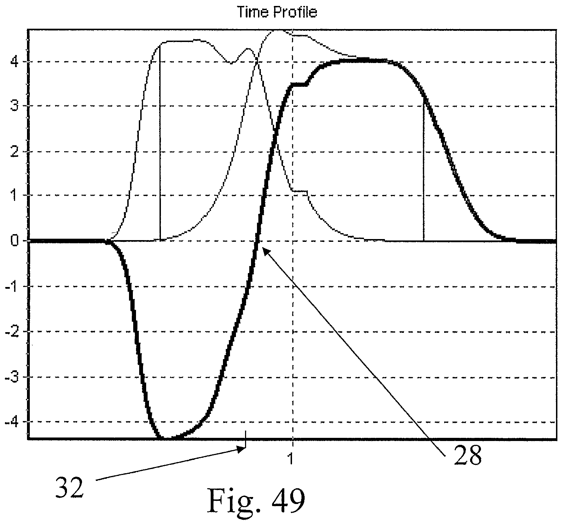

Les figures 48 et 49 montre respectivement le signal polarimétrique en trait gras au démarrage de l'unité et après régulation.

Les conditions de départ sont : ΔT=1.76min, la position du point caractéristique 28 sur la figure 48 est est supérieure à 1, ce qui implique un « retard » que la première routine va corriger en augmentant le volume de phase mobile permettant, sur un cycle de déplacer le point caractéristique. Dans cet exemple, c'est la variation de la période du procédé qui permet cette régulation : à débit constant, augmenter le volume de phase mobile permettant sur un cycle de déplacer le point caractéristique résulte en une augmentation de la période. Sur la figure 49, le point caractéristique 28 est au point 32 (par exemple 0,9).

Les conditions après régulation, c'est à dire positionnement du point caractéristique au point d'abscisse 0,9 , sont : ΔT=1.82min.

Cet exemple illustre l'intérêt de la première routine. Une régulation d'un point caractéristique en une position cible n'exige pas d'étalonnage rigoureux ni de mesure précise de pureté, et peut se faire d'un cycle à l'autre. La position cible optimale peut ainsi être définie par l'utilisateur du procédé ou de façon automatique par l'ajout d'un dispositif de mesure des puretés des collectes par exemple moyennées sur un cycle et l'utilisation des routines 2 et 3 de l'invention.

Les exemples illustrent que l'invention s'applique à des procédés continus ou discontinus, en contrôlant le volume de phase mobile qui permet de positionner un point caractéristique, ce en modifiant le débit de fluide, ou en changeant la durée pendant laquelle on applique un débit de phase mobile dans le système, naturellement une combinaison des deux approches est possible.

Un procédé multi-colonnes de type SSMB est composé d'un ensemble de périodes (intervalle de temps séparant le déplacement des lignes d'éluant, charge, extrait et raffinat). Chacune de ces périodes est un ensemble de sous séquences. La modification du volume de phase mobile permettant de positionner un point caractéristique peut alors se faire par modification du débit ou en changeant la durée d'application du débit sur la durée d'une ou plusieurs des séquences qui composent la période.

### EXEMPLE 7

Cet exemple illustre un point caractéristique utilisable dans la zone de séparation appliquable préférentiellement sur un procédé CycloJet ou sur un procédé similaire au procédé de l'exemple 6.

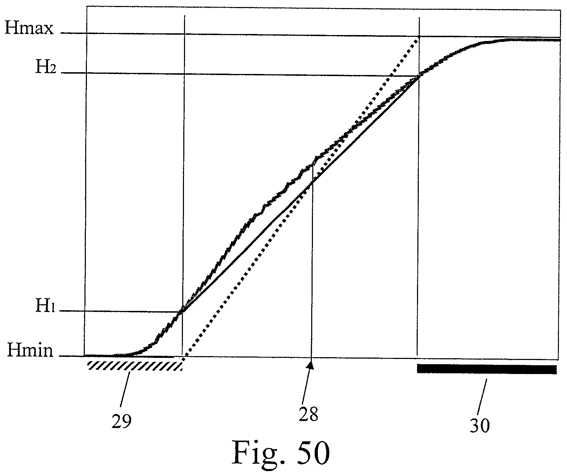

La figure 19 montre un historique de signal d'un détecteur UV que l'on peut obtenir sur un procédé CycloJet. La figure 50 montre l'intégration dans le temps du signal fourni par le détecteur UV montré figure 19 - en ligne grise épaisse (non droite).

La figure 50 montre un signal UV intégré dans le temps sur un historique procédé Cyclojet.

Le signal de la figure 50 présente des hauteurs minimum Hmin et maximum Hmax en début et fin de cycle. En fin de collecte 29, la hauteur est H₁ et en début de collecte 30, la hauteur du signal est H₂.

Une première droite en pointillés est tracée entre :
- un point d'abscisse fin de collecte 29 et hauteur Hmin
- un point d'abscisse début de collecte 30 et hauteur Hmax

Une seconde droite en trait plein est tracée entre :
- un point d'abscisse fin de collecte 29 et hauteur H₁
- un point d'abscisse début de collecte 30 et hauteur H₂

L'intersection des deux droites ainsi obtenues est un point caractéristique dont l'abscisse ou position peut être régulée selon l'invention.

Dans cet exemple, il n'est pas nécessaire de connaître avec précision les concentrations des espèces, ce que le détecteur UV ne permet pas. Il est donc possible de considérer comme variable spécifique le signal en lui même mais également une transformation de ce signal comme par exemple une intégration.

## Revendications

1. Procédé de séparation de fraction d'un mélange dans un dispositif de chromatographie ayant
- une ou plusieurs colonnes (12) en boucle, une phase mobile en circulation déplaçant les fractions du mélange à séparer dans ladite boucle,
- des points d'injection de mélange (14) et d'éluant (18),
- des points de collectes de fractions (16, 20),
- des organes de séquençage des points d'injection et de collecte,
le procédé comprenant des étapes de collecte des fractions, d'injection de mélange entre deux collectes successives dans l'intervalle où les fractions du mélange sortent de la ou les colonnes et sont envoyées vers l'entrée suivante ;
le procédé étant **caractérisé en ce qu'**il comprend en outre les étapes de :
- contrôle en un noeud (24) du dispositif, de l'historique d'une variable spécifique des fractions du mélange à séparer,
- détection d'un point caractéristique (28) de l'historique, le point caractéristique étant entre deux étapes successives de collecte de fraction,
- comparaison de la position du point caractéristique par rapport à une position cible (32),
- réglage de la quantité de la phase mobile modifiant la position du point caractéristique pour faire coïncider la position du point caractéristique avec la position cible.

2. Le procédé selon la revendication 1, **caractérisé en ce que** le contrôle de l'historique est réalisé en un seul noeud.

3. Le procédé selon la revendication 1 ou 2, comprenant en outre, les étapes de :
- mesure de la pureté d'au moins une fraction collectée,
- comparaison de la pureté mesurée avec une pureté prédéterminée,
le procédé étant **caractérisé en ce qu'**il comprend en outre une étape de définition du point cible en fonction de la différence entre la pureté mesurée et la pureté prédéterminée.

4. Le procédé selon l'une des revendications 1 à 3, comprenant en outre les étapes de
- mesure de la pureté d'au moins deux fractions collectées,
- comparaison de la pureté mesurée des fractions avec respectivement une pureté prédéterminée,
le procédé étant **caractérisé en ce qu'**il comprend en outre une étape de définition de la position cible en fonction de la différence entre les puretés mesurées et les puretés prédéterminées.

5. Le procédé selon l'une des revendications 1 à 4, **caractérisé en ce que** au cours de l'étape de définition de la position cible, la position cible est définie suite à la modification de la position de l'injection de mélange sur l'historique.

6. Le procédé selon l'une des revendications 1 à 5, comprenant en outre, les étapes de :
- mesure de la pureté d'au moins une fraction collectée,
- comparaison de la pureté mesurée avec une pureté prédéterminée,
le procédé étant **caractérisé en ce qu'**il comprend en outre une étape de modification de la quantité de mélange injecté en fonction de la différence entre la pureté mesurée et la pureté prédéterminée.

7. Le procédé selon l'une des revendications 1 à 6, comprenant en outre les étapes de
- mesure de la pureté d'au moins deux fractions collectées,
- comparaison de la pureté mesurée des fractions avec respectivement une pureté prédéterminée,
le procédé étant **caractérisé en ce qu'**il comprend en outre une étape de modification de la quantité de mélange injecté en fonction de la différence entre les puretés mesurées et les puretés prédéterminées.

8. Le procédé selon l'une des revendications 1 à 7, **caractérisé en ce qu'**il comprend en outre des étapes de
- contrôle en un noeud du dispositif, de l'historique d'une variable spécifique des fractions du mélange à séparer,
- détection d'un deuxième point caractéristique (40) de l'historique, dédié à l'adsorption ou à la collecte d'une fraction du mélange moins retenue, situé entre l'étape de soutirage ou de collecte de fraction moins retenue et l'étape d'injection d'éluant ;
- comparaison de la position du point caractéristique par rapport à une position cible,
- réglage de la quantité de la phase mobile modifiant la position du point caractéristique pour faire coïncider la position du point caractéristique avec la position cible.

9. Le procédé selon la revendication 8, **caractérisé en ce que** le dispositif comprend une zone en entrée de laquelle une fraction moins retenue est soutirée et en sortie de laquelle de l'éluant est injecté,
le procédé comprenant, à l'étape de réglage, le réglage du débit moyen dans cette zone pour faire coïncider la position du point caractéristique avec la position cible.

10. Le procédé selon la revendication 8, **caractérisé en ce que**, au cours de l'étape de réglage, la durée de l'étape de collecte de la fraction la moins retenue est modifiée pour faire coïncider la position du point caractéristique avec la position cible.

11. Le procédé selon l'une des revendications 1 à 10, étant **caractérisé en ce qu'**il comprend en outre des étapes de
- contrôle en un noeud du dispositif, de l'historique d'une variable spécifique des fractions du mélange à séparer,
- détection d'un troisième point caractéristique (41) de l'historique, dédié à la désorption ou à la collecte d'une fraction du mélange plus retenue, situé entre l'étape d'injection d'éluant et l'étape de collecte ou de soutirage de fraction plus retenue ;
- comparaison de la position du point caractéristique par rapport à une position cible ;
- réglage de la quantité de la phase mobile modifiant la position du point caractéristique pour faire coïncider la position du point caractéristique avec la position cible.

12. Le procédé selon la revendication 11, le dispositif comprend une zone en entrée de laquelle de l'éluant est injecté et en sortie de laquelle une fraction plus retenue est soutirée,
le procédé étant **caractérisé en ce qu'**il comprend, à l'étape de réglage, le réglage du débit moyen dans cette zone pour faire coïncider la position du point caractéristique avec la position cible.

13. Le procédé selon la revendication 11, **caractérisé en ce que**, au cours de l'étape de réglage, la durée de l'étape de collecte de la fraction la plus retenue est modifiée pour faire coïncider la position du point caractéristique avec la position cible.

14. Le procédé selon l'une des revendications 1 à 13, **caractérisé en ce que** le point caractéristique est choisi parmi le groupe consistant en un point d'inflexion de l'historique, en un seuil de l'historique, en un extremum de l'historique, en une valeur nulle, en une pente définie de l'historique.

15. Le procédé selon l'une des revendications 1 à 14, **caractérisé en ce que** la variable spécifique est choisie parmi le groupe consistant en le pouvoir rotatoire, en l'adsorption de rayonnement spectroscopique, en l'émission de rayonnement spectroscopique, en la densité, en l'indice de réfraction, en la conductivité, en pH.

16. Le procédé selon l'une des revendications 1 à 15, **caractérisé en ce que** l'injection de mélange est continue, que le dispositif comprend plusieurs colonnes connectées en série et que le dispositif chromatographique est adapté au procédé VariCol, ou au procédé Lit Mobile Simulé.

17. Utilisation d'un procédé selon l'une quelconque des revendications 1 à 16 pour la séparation et/ ou la purification de mélange d'intérêts, d'énantiomères, de molécules, de protéines, d'anticorps, ou de composés pharmaceutiques.

## Patentansprüche

1. Verfahren zum Trennen einer Fraktion einer Mischung in einer Chromatographievorrichtung, umfassend
- eine oder mehrere Säulen (12) in einer Schleife, wobei eine zirkulierende mobile Phase die Fraktionen der zu trennenden Mischung in der Schleife verdrängt,
- Einspritzstellen von Mischung (14) und Elutionsmittel (18),
- Sammelstellen von Fraktionen (16, 20),
- Organe zum Sequenzieren der Einspritz- und Sammelstellen,
wobei das Verfahren die Schritte des Sammelns der Fraktionen, des Einspritzens der Mischung zwischen zwei aufeinanderfolgenden Sammlungen in dem Intervall, in dem die Fraktionen der Mischung aus der Säule oder den Säulen austreten und zum nächsten Einlass gesendet werden,
wobei das Verfahren **dadurch gekennzeichnet ist, dass** es ferner die Schritte aufweist des:
- Überwachens der Historie einer spezifischen Variablen der Fraktionen der zu trennenden Mischung in einem Knoten (24) der Vorrichtung,
- Erfassens eines charakteristischen Punktes (28) der Historie, wobei der charakteristische Punkt zwischen zwei aufeinanderfolgenden Schritten des Sammelns der Fraktion ist,
- Vergleichens der Position des charakteristischen Punktes mit einer Zielposition (32),
- Einstellens der Menge der mobilen Phase, die die Position des charakteristischen Punkts ändert, um die Position des charakteristischen Punkts mit der Zielposition zusammenfallen zu lassen.

2. Verfahren nach Anspruch 1, **dadurch gekennzeichnet, dass** das Überwachen der Historie an einem einzigen Knoten durchgeführt wird.

3. Verfahren nach Anspruch 1 oder 2, ferner umfassend die Schritte des:
- Messens der Reinheit mindestens einer gesammelten Fraktion,
- Vergleichens der gemessenen Reinheit mit einer vorbestimmten Reinheit,
wobei das Verfahren **dadurch gekennzeichnet ist, dass** es ferner einen Schritt des Definierens des Zielpunkts in Abhängigkeit von der Differenz zwischen der gemessenen Reinheit und der vorbestimmten Reinheit aufweist.

4. Verfahren nach einem der Ansprüche 1 bis 3, ferner umfassend die Schritte des
- Messens der Reinheit von mindestens zwei gesammelten Fraktionen,
- Vergleichens der gemessenen Reinheit der Fraktionen jeweils mit einer vorbestimmten Reinheit,
wobei das Verfahren **dadurch gekennzeichnet ist, dass** es ferner einen Schritt des Definierens der Zielposition in Abhängigkeit von der Differenz zwischen den gemessenen Reinheiten und den vorbestimmten Reinheiten aufweist.

5. Verfahren nach einem der Ansprüche 1 bis 4, **dadurch gekennzeichnet, dass** bei dem Schritt des Definierens der Zielposition die Zielposition infolge der Änderung der Position des Einspritzens der Mischung in der Historie definiert wird.

6. Verfahren nach einem der Ansprüche 1 bis 5, ferner umfassend die Schritte des:
- Messens der Reinheit mindestens einer gesammelten Fraktion,
- Vergleichens der gemessenen Reinheit mit einer vorbestimmten Reinheit,
wobei das Verfahren **dadurch gekennzeichnet ist, dass** es ferner einen Schritt des Änderns der Menge an eingespritzter Mischung in Abhängigkeit von der Differenz zwischen der gemessenen Reinheit und der vorbestimmten Reinheit aufweist.

7. Verfahren nach einem der Ansprüche 1 bis 6, ferner umfassend die Schritte des
- Messens der Reinheit von mindestens zwei gesammelten Fraktionen,
- Vergleichens der gemessenen Reinheit der Fraktionen jeweils mit einer vorbestimmten Reinheit,
wobei das Verfahren **dadurch gekennzeichnet ist, dass** es ferner einen Schritt des Änderns der Menge an eingespritzter Mischung in Abhängigkeit von der Differenz zwischen den gemessenen Reinheiten und den vorbestimmten Reinheiten aufweist.

8. Verfahren nach einem der Ansprüche 1 bis 7, **dadurch gekennzeichnet, dass** es ferner Schritte aufweist des
- Überwachens der Historie einer spezifischen Variablen der Fraktionen der zu trennenden Mischung in einem Knoten der Vorrichtung,
- Erfassens eines zweiten charakteristischen Punktes (40) der Historie, der der Adsorption oder dem Sammeln einer Fraktion der am wenigsten zurückgehaltenen Mischung gewidmet ist, der sich zwischen dem Schritt des Entnehmens oder des Sammelns der am wenigstens zurückgehaltenen Mischung und dem Schritt des Einspritzens des Elutionsmittels befindet;
- Vergleichens der Position des charakteristischen Punktes mit einer Zielposition,
- Einstellens der Menge der mobilen Phase, die die Position des charakteristischen Punkts ändert, um die Position des charakteristischen Punkts mit der Zielposition zusammenfallen zu lassen.

9. Verfahren nach Anspruch 8, **dadurch gekennzeichnet, dass** die Vorrichtung einen Bereich aufweist, an dessen Eintritt eine am wenigsten zurückgehaltene Fraktion entnommen wird und an dessen Austritt das Elutionsmittel eingespritzt wird,
wobei das Verfahren in dem Schritt des Einstellens das Einstellen des durchschnittlichen Durchsatzes in diesem Bereich aufweist, um die Position des charakteristischen Punkts mit der Zielposition zusammenfallen zu lassen.

10. Verfahren nach Anspruch 8, **dadurch gekennzeichnet, dass** bei dem Schritt des Einstellens die Dauer des Schrittes des Sammelns der am wenigsten zurückgehaltenen Fraktion geändert wird, um die Position des charakteristischen Punkts mit der Zielposition zusammenfallen zu lassen.

11. Verfahren nach einem der Ansprüche 1 bis 10, **dadurch gekennzeichnet, dass** es ferner Schritte aufweist des
- Überwachens der Historie einer spezifischen Variablen der Fraktionen der zu trennenden Mischung in einem Knoten der Vorrichtung,
- Erfassens eines dritten charakteristischen Punktes (41) der Historie, der der Desorption oder dem Sammeln einer Fraktion der am meisten zurückgehaltenen Mischung gewidmet ist, der sich zwischen dem Schritt des Einspritzens des Elutionsmittels und dem Schritt des Sammelns oder des Entnehmens der am meisten zurückgehaltenen Fraktion befindet,
- Vergleichens der Position des charakteristischen Punktes mit einer Zielposition,
- Einstellens der Menge der mobilen Phase, die die Position des charakteristischen Punkts ändert, um die Position des charakteristischen Punkts mit der Zielposition zusammenfallen zu lassen.

12. Verfahren nach Anspruch 11, die Vorrichtung weist einen Bereich auf, an dessen Eintritt ein Elutionsmittel eingespritzt wird und an dessen Austritt eine am meisten zurückgehaltene Fraktion entnommen wird,
wobei das Verfahren **dadurch gekennzeichnet ist, dass** es in dem Schritt des Einstellens das Einstellen des durchschnittlichen Durchsatzes in diesem Bereich aufweist, um die Position des charakteristischen Punkts mit der Zielposition zusammenfallen zu lassen.

13. Verfahren nach Anspruch 11, **dadurch gekennzeichnet, dass** bei dem Schritt des Einstellens die Dauer des Schrittes des Sammelns der am meisten zurückgehaltenen Fraktion geändert wird, um die Position des charakteristischen Punkts mit der Zielposition zusammenfallen zu lassen.

14. Verfahren nach einem der Ansprüche 1 bis 13, **dadurch gekennzeichnet, dass** der charakteristische Punkt ausgewählt ist aus der Gruppe bestehend aus einem Wendepunkt der Historie, aus einem Schwellenwert der Historie, aus einem Extremwert der Historie, aus einem Nullwert, aus einer definierten Steigung der Historie.

15. Verfahren nach einem der Ansprüche 1 bis 14, **dadurch gekennzeichnet, dass** die spezifische Variable ausgewählt ist aus der Gruppe bestehend aus der Drehung, aus der spektroskopischen Strahlungsadsorption, aus der spektroskopischen Strahlungsemission, aus der Dichte, aus dem Brechungsindex, aus der Leitfähigkeit, aus dem pH-Wert.

16. Verfahren nach einem der Ansprüche 1 bis 15, **dadurch gekennzeichnet, dass** das Einspritzen der Mischung kontinuierlich ist, dass die Vorrichtung mehrere Säulen aufweist, die in Reihe verbunden sind, und dass die Chromatographievorrichtung für das VariCol-Verfahren oder für das Simulated Moving Bed Verfahren geeignet ist.

17. Verwendung eines Verfahrens nach einem der Ansprüche 1 bis 16 zum Trennen und/oder Reinigung einer Mischung von Interesse, von Enantiomeren, von Molekülen, von Proteinen, von Antikörpern oder von pharmazeutischen Verbindungen.

## Claims

1. Process for separating a fraction of a mixture in a chromatography device having
- one or more columns (12) in a loop, a circulating mobile phase shifting the fractions of the mixture to be separated in said loop,
- injection points for mixture (14) and eluent (18),
- fractions collection points (16, 20),
- sequencing elements for injection and collection points,
the process comprising steps of collecting the fractions, injecting the mixture between two successive collections in the period where the fractions of the mixture leave the column(s) and are sent to the next inlet; wherein the process is **characterized in that** it further comprises the steps of:
- at a node (24) of the device, monitoring the history of a specific variable of the fractions of the mixture to be separated,
- detection of a characteristic point (28) of the history, the characteristic point being between two successive fraction collection steps,
- comparison of the position of the characteristic point with a target position (32),
- adjustment of the quantity of the mobile phase modifying the position of the characteristic point in order to make the position of the characteristic point coincide with the target position.

2. The process according to claim 1, **characterized in that** monitoring of the history is carried out at a single node.

3. The process according to claim 1 or 2, further comprising the steps of:
- measuring the purity of at least one collected fraction,
- comparing of the measured purity with a predetermined purity,
wherein the process is **characterized in that** it further comprises a step of defining the target point according to the difference between the measured purity and the predetermined purity.

4. The process according to any one of claims 1 to 3, further comprising the steps of
- measuring the purity of at least two collected fractions,
- comparing the measured purity of the fractions with respectively a predetermined purity,
wherein the process is **characterized in that** it further comprises a step of defining the target position according to the difference between the measured purities and the predetermined purities.

5. The process according to any one of claims 1 to 4, **characterized in that** during the step of defining the target position, the target position is defined following modification of the position of the mixture injection on the history.

6. The process according to any one of claims 1 to 5, also comprising the steps of:
- measuring the purity of at least one collected fraction,
- comparing the measured purity with a predetermined purity,
wherein the process is **characterized in that** it further comprises a step of modifying the quantity of mixture injected according to the difference between the measured purity and the predetermined purity.

7. The process according to any one of claims 1 to 6, also comprising the steps of
- measuring the purity of at least two collected fractions,
- comparing the measured purity of the fractions with respectively a predetermined purity,
wherein the process is **characterized in that** it further comprises a step of modifying the quantity of mixture injected according to the difference between the measured purities and the predetermined purities.

8. The process according to any one of claims 1 to 7, **characterized in that** it further comprises steps of
- in a node of the device, monitoring the history of a specific variable of the fractions of the mixture to be separated,
- detecting a second characteristic point (40) of the history, dedicated to the adsorption or dedicated to the collection of a fraction of the less retained mixture, situated between the step of drawing-off or collecting of the less retained fraction and the eluent-injection step;
- comparing the position of the characteristic point according to a target position,
- adjusting the quantity of the mobile phase modifying the position of the characteristic point in order to make the position of the characteristic point coincide with the target position.

9. The process according to claim 8, **characterized in that** the device comprises a zone at the inlet of which a less retained fraction is drawn off and at the outlet of which eluent is injected,
the process comprising, at the adjustment step, the adjustment of the average flow rate in this zone in order to make the position of the characteristic point coincide with the target position.

10. The process according to claim 8, **characterized in that**, during the adjustment step, the duration of the step of collecting the less retained fraction is modified in order to make the position of the characteristic point coincide with the target position.

11. **The** process according to any one of claims 1 to 10, **characterized in that** it also comprises steps of
- in a node of the device, monitoring the history of a specific variable of the fractions of the mixture to be separated,
- detecting a third characteristic point (41) of the history, dedicated to the desorption or the collection of a more retained fraction of the mixture, situated between the eluent-injection step and the step of collecting or drawing-off more retained fraction;
- comparing the position of the characteristic point according to a target position;
- adjustment of the quantity of the mobile phase modifying the position of the characteristic point in order to make the position of the characteristic point coincide with the target position.

12. **The** process according to claim 11, wherein the device comprises a zone at the inlet of which eluent is injected and at the outlet of which a more retained fraction is drawn off,
**characterized in that** the process comprises, at the adjustment step, the adjustment of the average flow rate in this zone in order to make the position of the characteristic point coincide with the target position.

13. The process according to claim 11, **characterized in that**, during the adjustment step, the duration of the step of collecting the more retained fraction is modified in order to make the position of the characteristic point coincide with the target position.

14. The process according to any one of claims 1 to 13, **characterized in that** the characteristic point is chosen from the group consisting of an inflexion point of the history, a threshold of the history, an extremum of the history, a zero value, a defined slope of the history.

15. The process according to any one of claims 1 to 14, **characterized in that** the specific variable is chosen from the group consisting of rotatory power, adsorption of spectroscopic radiation, emission of spectroscopic radiation, density, refractive index, conductivity, pH.

16. The process according to any one of claims 1 to 15, **characterized in that** the mixture injection is continuous, the device comprises several columns connected in series and the chromatographic device is suitable for the VariCol process, or the simulated moving bed process.

17. Use of a process according to any one of claims 1 to 16 for the separation and/ or purification of a mixture of interest, of enantiomers, of molecules, of proteins, of antibodies, of pharmaceutical compounds.
